# EUROPEAN PATENT APPLICATION

(11) **EP 4 836 316 A1**
(43) Date of publication of application: **04.11.2026**
(21) Application number: 25821121.8
(22) Date of filing: 11.06.2025
(51) Int. Cl.: H04B 7/185

(54) **SATELLITE COMMUNICATION METHOD, ELECTRONIC DEVICE, AND COMPUTER-READABLE STORAGE MEDIUM**

(30) Priority: 13.06.2024 CN 202410764768; 31.07.2024 CN 202411051031
(71) Applicant: Huawei Technologies Co., Ltd., Shenzhen, Guangdong 518129 (CN)
(72) Inventor: TIAN, Yuanyuan, Shenzhen, Guangdong 518129 (CN)
(74) Representative: Huawei European IPR
(86) International application number: PCT/CN2025/100385
(87) International publication number: WO 2025/256545

(57) **Abstract**

This application provides a satellite communication method, an electronic device, and a computer-readable storage medium. A second application on a first electronic device may invoke a satellite communication function of a first communication application that is on the first electronic device and that has been connected to a first satellite, and the second application may send a first message to the first satellite via the first communication application. In this way, the second application can send a satellite message to the first satellite without connecting to the satellite. This makes it convenient for a user to operate the first electronic device in a timely manner to send a satellite message, and also reduces development workload of the second application is also reduced.

## Description

This application claims priorities to Chinese Patent Application No. 202410764768.X, filed with the China National Intellectual Property Administration on June 13, 2024 and entitled "SATELLITE COMMUNICATION METHOD, ELECTRONIC DEVICE, AND COMPUTER-READABLE STORAGE MEDIUM", and to Chinese Patent Application No. 202411051031.X, filed with the China National Intellectual Property Administration on July 31, 2024 and entitled "SATELLITE COMMUNICATION METHOD, ELECTRONIC DEVICE, AND COMPUTER-READABLE STORAGE MEDIUM", both of which are incorporated herein by reference in their entireties.

### TECHNICAL FIELD

This application relates to the field of terminal technologies, and in particular, to a satellite communication method, an electronic device, and a computer-readable storage medium.

### BACKGROUND

With development of communication technologies, users often use electronic devices such as mobile phones to perform communication in daily life. The electronic devices such as the mobile phones may implement a communication function outdoors via a mobile cellular network. However, the cellular network cannot cover all areas. For example, there may be areas that are not covered by the mobile cellular network in forests, deserts, mountainous areas, cities, and villages. When the user is in the area that is not covered by the mobile cellular network, a terminal device like a mobile phone carried by the user cannot provide a communication service due to poor reception of cellular signals. Consequently, inconvenience may be caused to the user, and in emergency, life and property safety of the user may be harmed.

A satellite communication system is an important infrastructure that integrates positioning, timing, and communication. Applications on the electronic devices need be connected to satellites to communicate with other devices via the satellites. When the user is in need of rescue, if the user cannot seek help from the outside in a timely manner via the satellite, life safety of the user may be endangered when the user is in a hazardous environment.

### SUMMARY

This application provides a satellite communication method, an electronic device, and a computer-readable storage medium. A second application on a first electronic device may invoke a satellite communication function of a first communication application that is on the first electronic device and that has been connected to a first satellite. In this way, the second application can send a satellite message to the first satellite without connecting to the satellite. This makes it convenient for a user to operate the first electronic device in a timely manner to send a satellite message, and also reduces development workload of the second application.

According to a first aspect, this application provides a satellite communication method. The method is applied to a satellite communication system, the satellite communication system includes a first electronic device and a second electronic device, and the first electronic device includes a first communication application and a second application. The method includes: When the first electronic device displays a first user interface of the second application, the first electronic device receives a first operation of a user; the first electronic device displays a satellite message editing page in response to the first operation; the first electronic device receives a second operation, by the user, of entering a first message on the satellite message editing page and sending the first message; in response to the second operation, the first communication application of the first electronic device sends the first message to the second electronic device via a first satellite; and the second electronic device receives the first message.

According to the method, the second application on the first electronic device may invoke a satellite communication function of the first communication application that is on the first electronic device and that has been connected to the first satellite. In this way, the second application can send a satellite message to the first satellite without connecting to the satellite. This reduces development workload of the second application.

For example, the second application may be a system application or a third-party application. The system application may include but is not limited to a home screen application, a settings application, a control center, and the like.

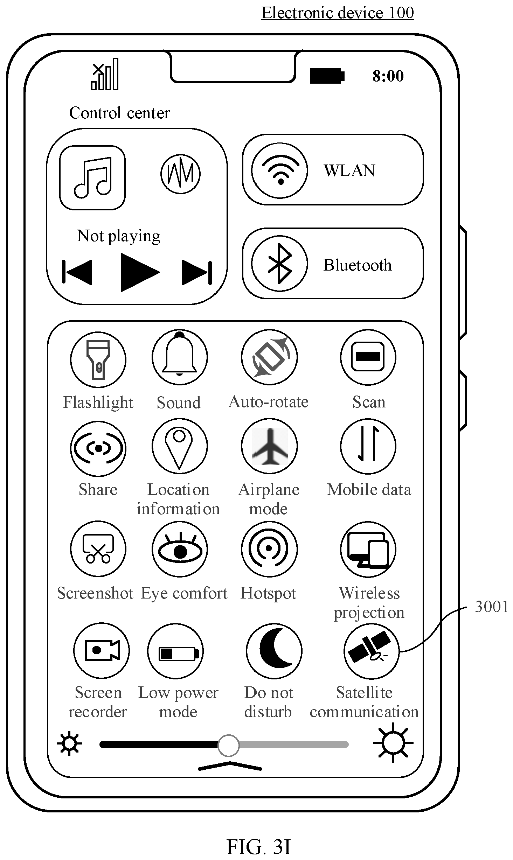

When the second application is the home screen application, that the first electronic device displays the first user interface of the second application may mean that the first electronic device displays a home screen. When the second application is the settings application, that the first electronic device displays the first user interface of the second application may mean that the first electronic device displays a setting interface. When the second application is the control center, that the first electronic device displays the first user interface of the second application may mean that the first electronic device displays a control center interface, for example, a control center interface shown in FIG. 3I.

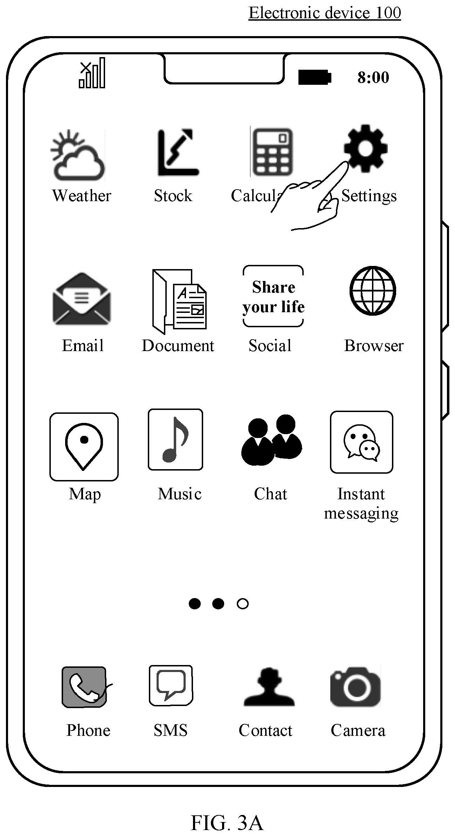

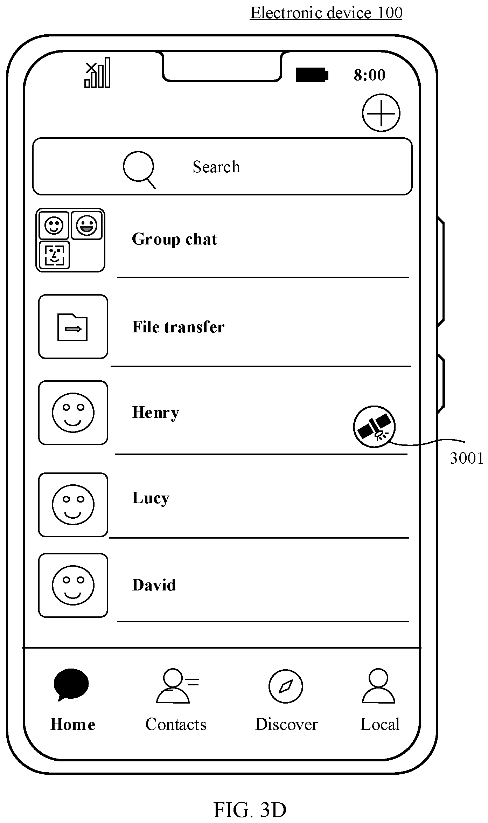

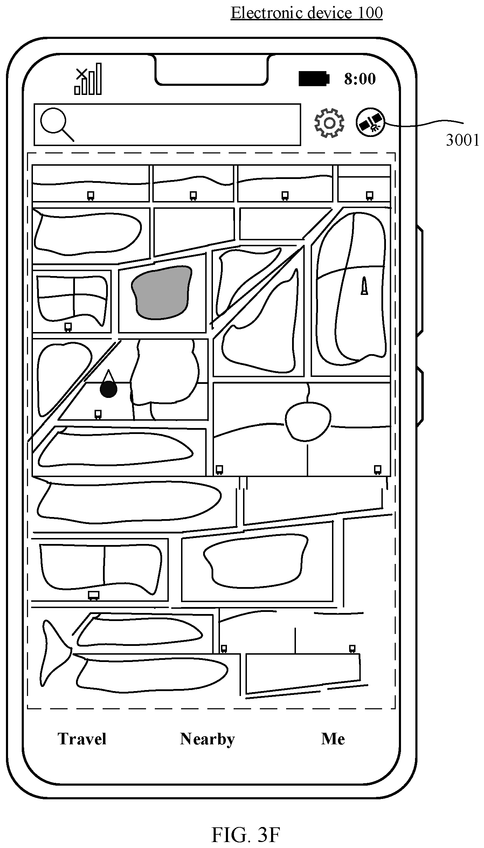

When the second application is the third-party application, that the first electronic device displays the first user interface of the second application may mean that the first electronic device displays a user interface in the third-party application, for example, a main interface of a MeeTime APP shown in FIG. 3D or a main interface of a map application shown in FIG. 3F.

In another embodiment, that the first electronic device displays the first user interface of the second application may alternatively mean that when the second application is in an active state, the second application may run in the foreground or may run in the background. When the second application runs in the foreground, the first electronic device displays a user interface in the second application; or when the second application runs in the background, the first electronic device does not display a user interface in the second application.

With reference to the first aspect, in a possible implementation, that the first electronic device displays the satellite message editing page in response to the first operation specifically includes: The first electronic device displays a second user interface in response to the first operation, where partial content of the first user interface is displayed in a first partial area of the second user interface, and the satellite message editing page is displayed in a second partial area of the second user interface.

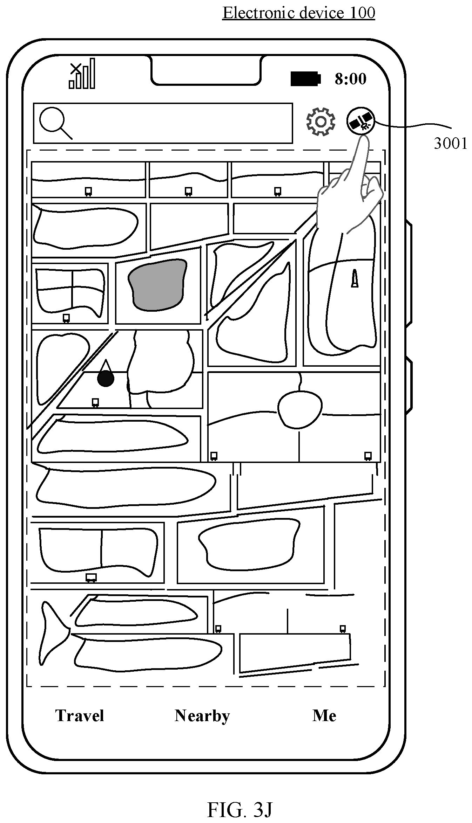

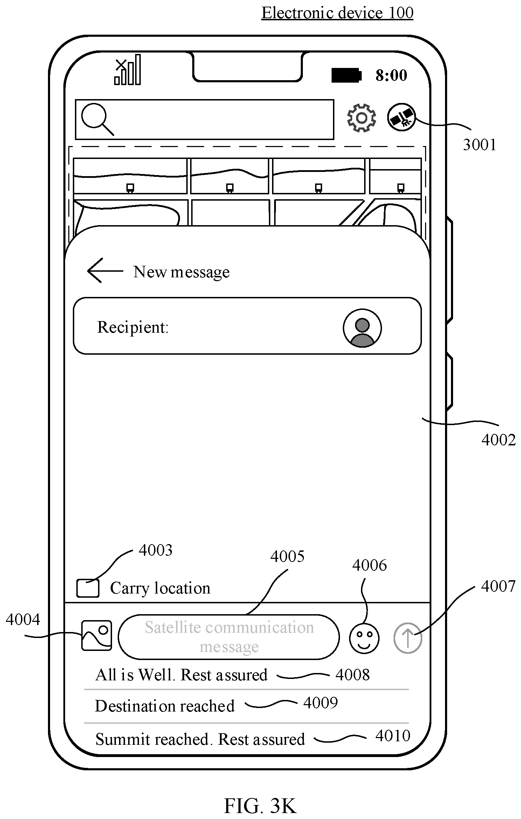

For example, the satellite message editing page may be a satellite message editing page 4002 shown in FIG. 3K, the first user interface may be a main interface of a map application shown in FIG. 3J, and the second user interface may be a user interface shown in FIG. 3K. The first partial area of the second user interface may be a display area in which some map content shown in FIG. 3K is located, and the second partial area of the second user interface may be a display area in which the satellite message editing page 4002 shown in FIG. 3K is located.

With reference to the first aspect, in a possible implementation, the first user operation is an operation for a physical button on the first electronic device.

According to the method, the user may quickly invoke, via the second application and the physical button on the first electronic device, the satellite communication function of the first communication application to send the satellite message.

For example, the first application may be a system application, and the physical button may be a side button, for example, a power button or a volume button.

In another embodiment, the first application may alternatively be a third-party application.

With reference to the first aspect, in a possible implementation, a first identifier is displayed in the first user interface, the first identifier indicates that the second application has permission to use a satellite communication capability of the first electronic device, and the first user operation is an operation for the first identifier.

According to the method, when the first electronic device has the satellite communication capability and the second application also has the satellite communication capability of using the first electronic device, the first electronic device may display the first identifier in the second application. The first identifier is used to inform the user that the second application may send the satellite message, and the user may trigger, based on the first identifier, the second application to send the satellite message.

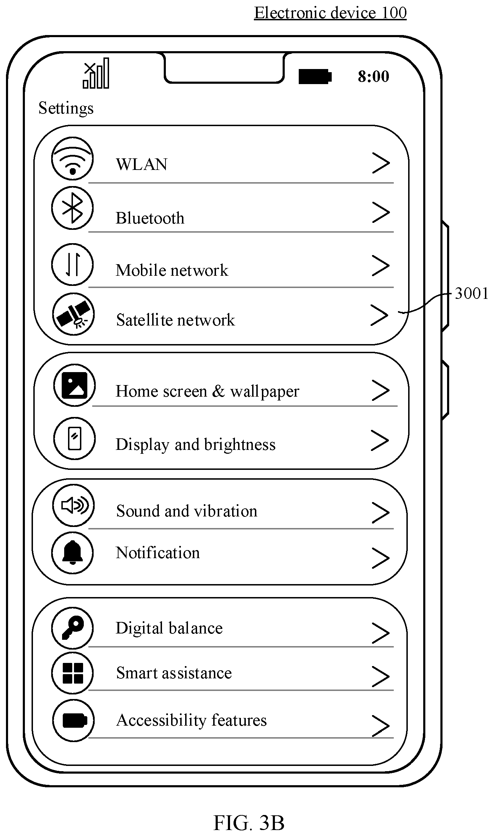

For example, the first identifier may be a satellite network entry 3001 shown in FIG. 3B to FIG. 3I.

With reference to the first aspect, in a possible implementation, the second application is the third-party application or the system application.

For example, the third-party application may be a map application or an instant messaging application. The system application may be the home screen application, the settings application, or the like.

With reference to the first aspect, in a possible implementation, the satellite message editing page is a page of the second application, and the first communication application obtains the first message via the second application.

According to the method, different second applications may provide different satellite message editing pages.

Optionally, a user-defined message is displayed on the satellite message editing page provided by the second application, and the user may select the user-defined message to quickly edit a to-be-sent satellite message. This reduces a user operation.

After the first electronic device receives an edited satellite message (the first message) sent by the user, the second application may send the first message to the first communication application, and the second application may send the first message to the first satellite by using the satellite communication capability of the first communication application.

For example, the satellite message editing page provided by the second application may be the satellite message editing page 4002 shown in FIG. 3K. User-defined messages displayed on the satellite message editing page provided by the second application may be user-defined messages corresponding to a plurality of user-defined message options shown in FIG. 3K.

With reference to the first aspect, in a possible implementation, the satellite message editing page is a page of the first communication application, and the first message is obtained by the first communication application.

According to the method, the second application does not need to have a capability of displaying the satellite message editing page. This can reduce development workload of the second application.

Optionally, a user-defined message is displayed on the satellite message editing page provided by the first communication application, and the user may select the user-defined message to quickly edit a to-be-sent satellite message. This reduces a user operation. The user-defined message may be from the second application to the first communication application.

After the first electronic device receives an edited satellite message (the first message) sent by the user, the first communication application may send the first message to the first satellite by using the satellite communication capability of the first communication application.

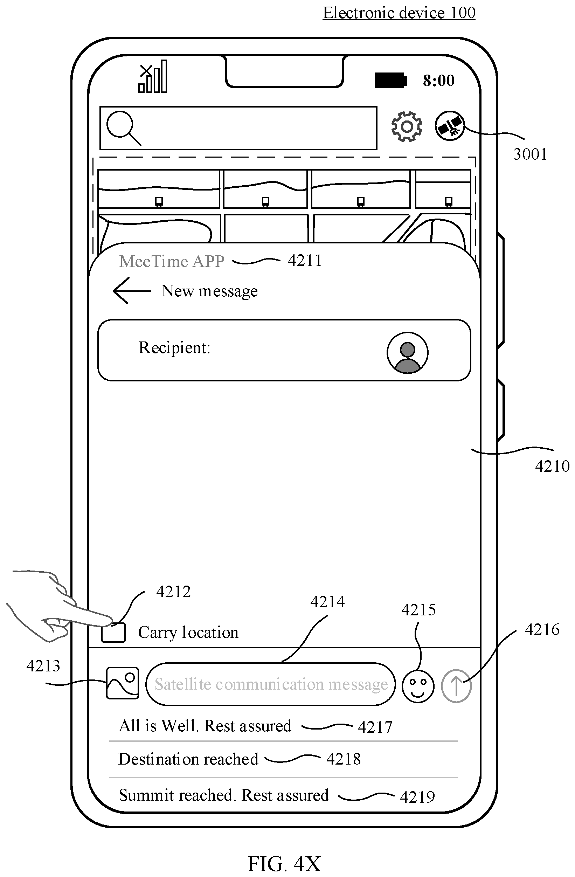

For example, the satellite message editing page provided by the first communication application may be a satellite message editing page 4210 shown in FIG. 4X. User-defined messages displayed on the satellite message editing page provided by the first communication application may be user-defined messages corresponding to a plurality of user-defined message options shown in FIG. 4X.

With reference to the first aspect, in a possible implementation, before the first electronic device sends the first message to the first satellite via the first communication application, the method further includes: When the first electronic device does not establish a satellite communication connection to the first satellite, the first electronic device obtains satellite alignment data via the first communication application, and displays a satellite alignment guidance page, where the satellite alignment page includes operation prompt information, and the operation prompt information is used to prompt the user to change a posture of the first electronic device, for the first electronic device to establish the satellite communication connection to the first satellite.

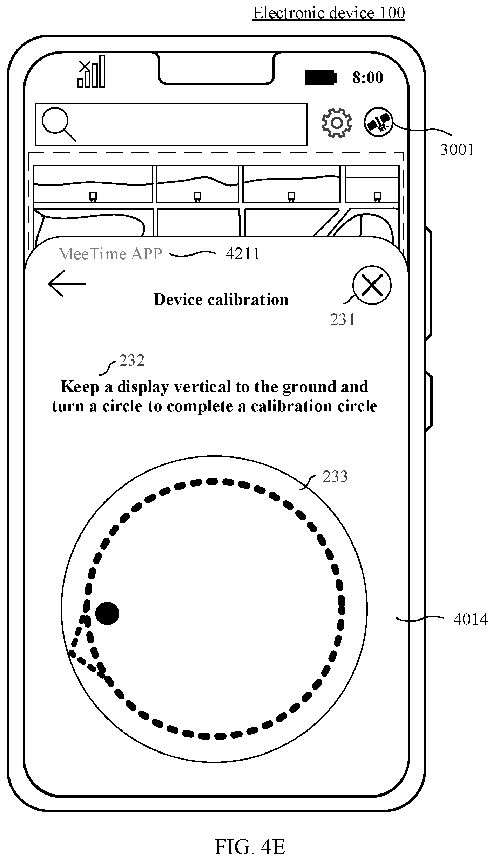

For example, the satellite alignment guidance page may be pages shown in FIG. 4E to FIG. 4J.

In some embodiments, after the first electronic device obtains the satellite alignment data via the first communication application, the first communication application may also send the satellite alignment data to the second application, and the second application may display the satellite alignment guidance page based on the satellite alignment data.

With reference to the first aspect, in a possible implementation, before the first electronic device sends the first message to the first satellite via the first communication application, the method further includes: The first electronic device displays first prompt information, where the first prompt information is used to prompt the user whether to send the first message to the first satellite via the first communication application. That the first electronic device sends the first message to the first satellite via the first communication application specifically includes: The first electronic device receives and responds to a third operation of the user for the first prompt information, and the first electronic device sends the first message to the first satellite via the first communication application.

According to the method, the first electronic device may prompt the user whether to send the first message via the first communication application, to avoid accidental touch.

Optionally, the first prompt information may be displayed after the first electronic device receives the first operation, or may be displayed after the first electronic device receives the second operation.

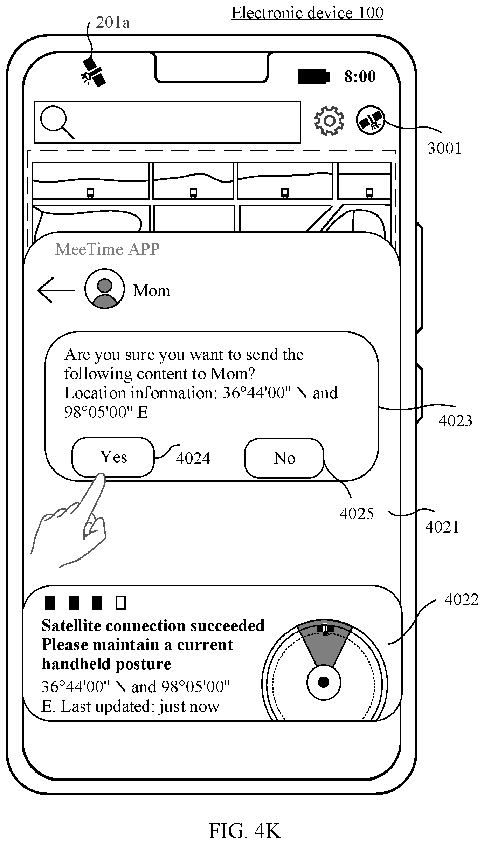

For example, the first prompt information may be prompt information 4023 shown in FIG. 4K. The third operation may be an input operation, for example, a tap operation, for a yes option 4024 in the prompt information 4023 shown in FIG. 4K.

With reference to the first aspect, in a possible implementation, after the first electronic device receives the second operation of entering the first message on the satellite message editing page and sending the first message by the user, the method further includes:

The first electronic device displays, in the first communication application, second prompt information indicating that the first message is already sent successfully.

Optionally, the first communication application may alternatively send, to the second application, a message indicating that the first message is already sent successfully, and the first electronic device may alternatively display, in the second application, the prompt information indicating that the first message is already sent successfully.

With reference to the first aspect, in a possible implementation, that the first communication application of the first electronic device sends the first message to the second electronic device via the first satellite specifically includes: The first communication application of the first electronic device sends the first message to the second electronic device based on recipient information of the first message via the first satellite, where the recipient information of the first message is obtained by the first electronic device from contact information of the second application, or obtained from contact information of the first communication application, or obtained from a contact application.

For example, the contact information of the second application may be emergency contact information set by the user in the second application, or may be rescue agency contact information preset in the second application, or may be information about a member in a social group created or joined by the user in the second application.

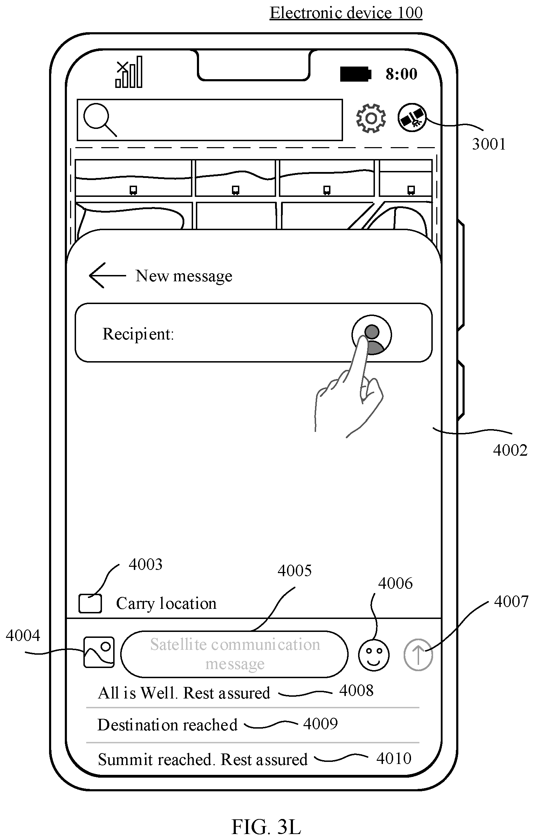

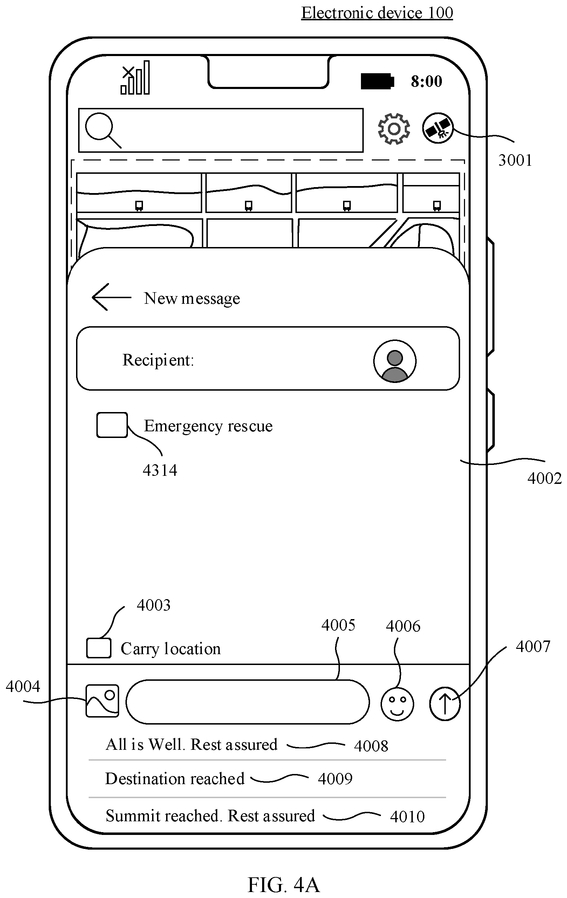

For example, for how the first electronic device confirms the recipient information, refer to descriptions in embodiments in FIG. 3L to FIG. 3R and FIG. 4A.

With reference to the first aspect, in a possible implementation, the first electronic device further includes a first modem, and the first modem is configured to connect to the first satellite. That the first communication application of the first electronic device sends, in response to the second operation, the first message to the second electronic device via the first satellite specifically includes: In response to the second operation, the first communication application of the first electronic device sends the first message to the first modem; the first modem of the first electronic device sends the first message to the first satellite; and the first satellite sends the first message to the second electronic device.

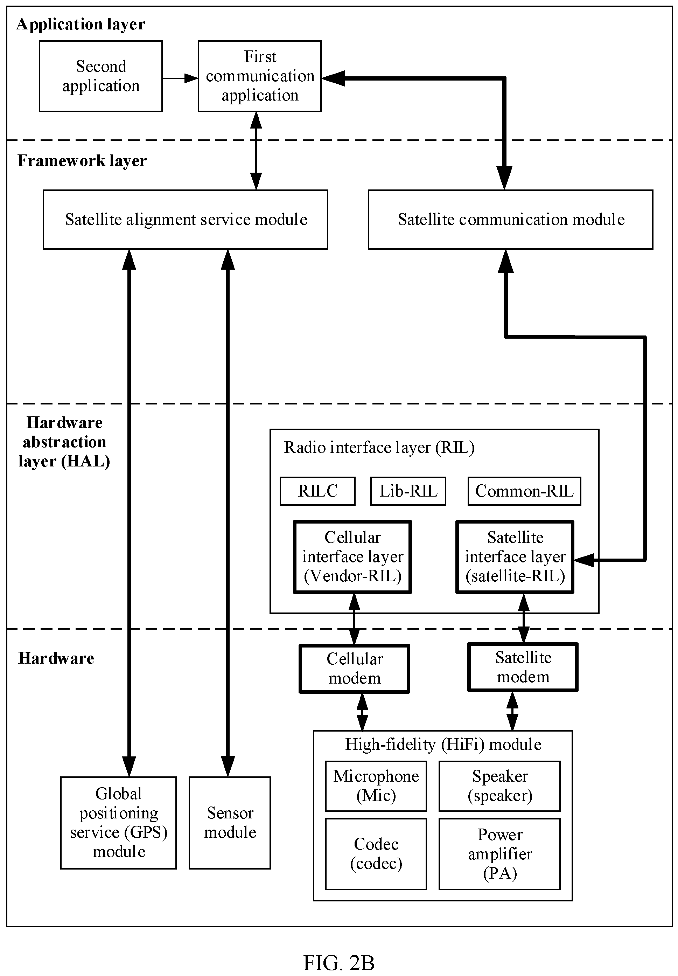

For example, for how the first communication application sends the first message to the first satellite, refer to descriptions in an embodiment in FIG. 2B.

With reference to the first aspect, in a possible implementation, the satellite communication system further includes a first server and a second server, the first server is a server of the first communication application, and the second server is a server of the second application. After the first electronic device receives the second operation of entering the first message on the satellite message editing page and sending the first message by the user, the method further includes: The first communication application of the first electronic device sends a verification message of the second application and the first message to the first server via the first satellite, where the first communication application obtains the verification message of the second application via the second application; the first server sends the first message and the verification message of the second application to the second server; and when confirming that the verification message of the second application meets a preset condition, the second server pushes the first message to a public platform of the second application or the second application.

According to the method, the second server may verify validity of the first message based on the verification message of the second application. For example, the second server confirms that the first message is sent by the second application, and then pushes the first message to the public platform of the second application or the second application. This can improve security.

For example, the public platform of the second application may include but is not limited to a website and/or an official account of the second application.

Optionally, if the verification message of the second application is obtained based on the first message, after receiving the first message, the application server may obtain verification signature information of the first message based on the first message. If signature information of the first message and the verification signature information of the first message meet a preset condition, for example, the signature information of the first message is the same as the verification signature information of the first message, it may be confirmed that the first message is a message sent by the second application, in other words, the first message is a valid message.

Optionally, if the verification message of the second application is not obtained based on the first message, for example, a preset verification message, after receiving the first message, the application server may obtain preset verification signature information of the first message. If signature information of the first message and the verification signature information of the first message meet a preset condition, for example, the signature information of the first message is the same as the verification signature information of the first message, it may be confirmed that the first message is a message sent by the second application, in other words, the first message is a valid message.

With reference to the first aspect, in a possible implementation, the satellite communication system further includes a first server, and the first server is a server of the first communication application. The second electronic device receives the first message specifically includes: The second electronic device receives the first message sent by the first server, where the first server obtains the first message via the first satellite; and/or the satellite communication system further includes a second server, where the second server is a server of the second application. That the second electronic device receives the first message specifically includes: The second application of the second electronic device receives the first message via the second server.

According to the method, when the first communication application is connected to the first satellite, the first server corresponding to the first communication application may be connected to the first satellite, and the first server may receive the first message sent by the first satellite, and send the first message to the second server or the second electronic device.

With reference to the first aspect, in a possible implementation, the second electronic device receives the first message via the first communication application or an SMS application.

With reference to the first aspect, in a possible implementation, when the second electronic device is logged in to an account of the first communication application, the second electronic device receives the first message via the first communication application.

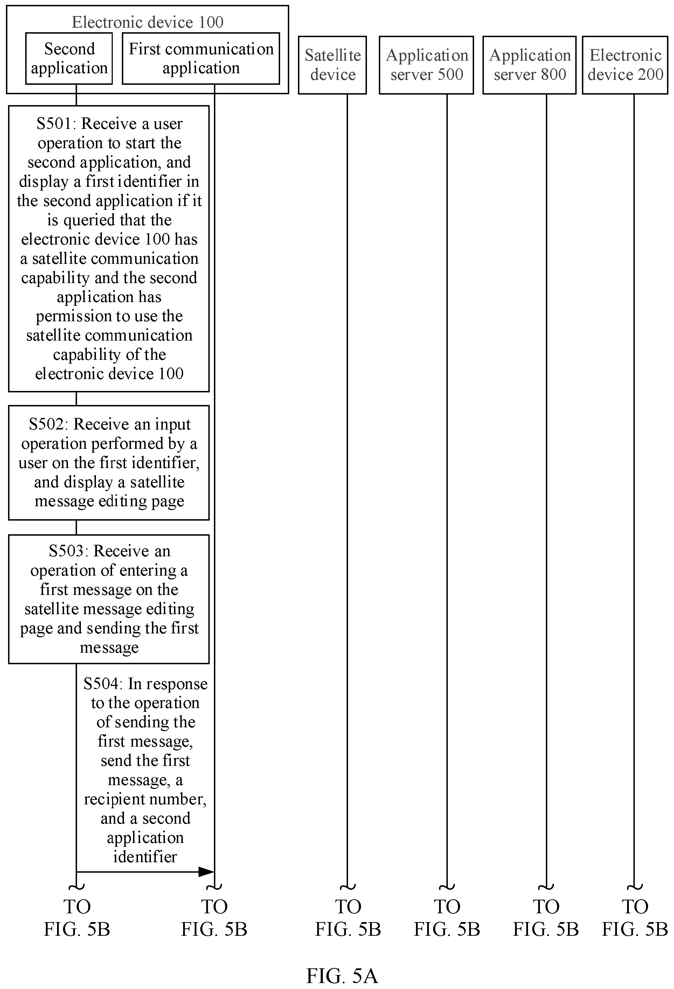

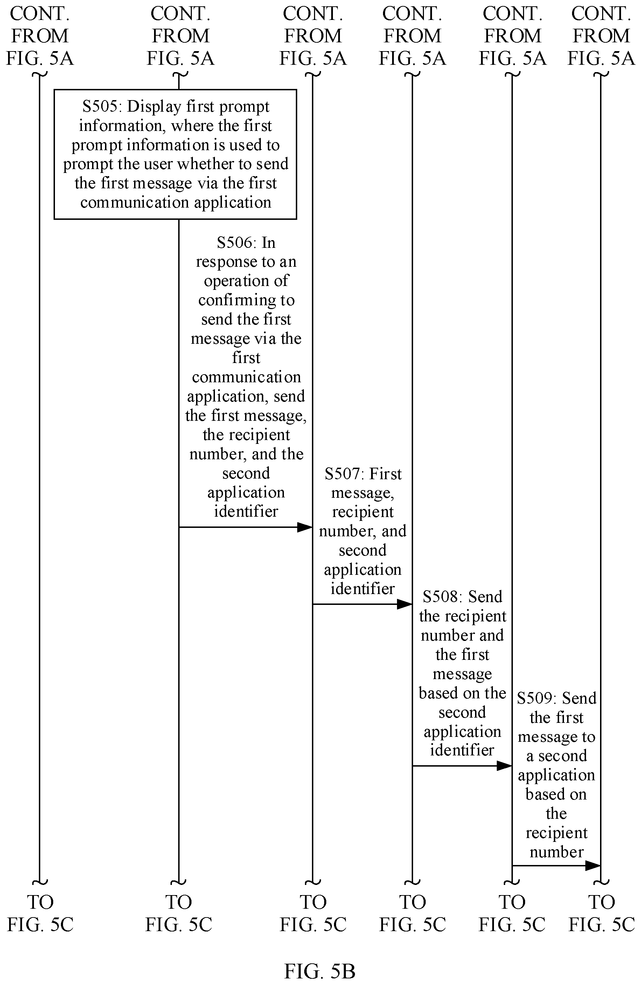

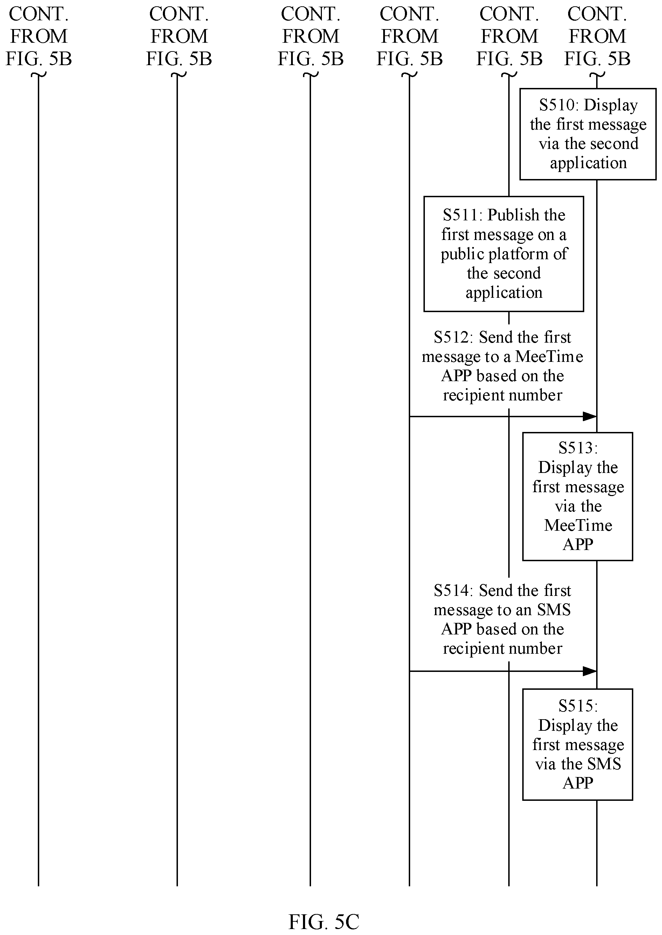

For how the second electronic device receives the first message, refer to descriptions in S508 to S515 in an embodiment in FIG. 5A to FIG. 5C.

According to a second aspect, this application provides a satellite communication method. The method is applied to a first electronic device, and the first electronic device includes a first communication application and a second application. The method includes: When the first electronic device displays a first user interface of the second application, the first electronic device receives a first operation of a user; the first electronic device displays a satellite message editing page in response to the first operation; the first electronic device receives a second operation of entering a first message on the satellite message editing page and sending the first message by the user; and in response to the second operation, the first communication application of the first electronic device sends the first message to a second electronic device via a first satellite.

With reference to the second aspect, in a possible implementation, that the first electronic device displays the satellite message editing page in response to the first operation specifically includes: The first electronic device displays a second user interface in response to the first operation, where partial content of the first user interface is displayed in a first partial area of the second user interface, and the satellite message editing page is displayed in a second partial area of the second user interface.

With reference to the second aspect, in a possible implementation, the first user operation is an operation for a physical button on the first electronic device.

With reference to the second aspect, in a possible implementation, a first identifier is displayed in the first user interface, the first identifier indicates that the second application has permission to use a satellite communication capability of the first electronic device, and the first user operation is an operation for the first identifier.

With reference to the second aspect, in a possible implementation, the second application is a third-party application or a system application.

With reference to the second aspect, in a possible implementation, the satellite message editing page is a page of the second application, and the first communication application obtains the first message via the second application.

With reference to the second aspect, in a possible implementation, the satellite message editing page is a page of the first communication application, and the first message is obtained by the first communication application.

With reference to the second aspect, in a possible implementation, before the first electronic device sends the first message to the first satellite via the first communication application, the method further includes: When the first electronic device does not establish a satellite communication connection to the first satellite, the first electronic device obtains satellite alignment data via the first communication application, and displays a satellite alignment guidance page, where the satellite alignment page includes operation prompt information, and the operation prompt information is used to prompt the user to change a posture of the first electronic device, for the first electronic device to establish the satellite communication connection to the first satellite.

With reference to the second aspect, in a possible implementation, before the first electronic device sends the first message to the first satellite via the first communication application, the method further includes: The first electronic device displays first prompt information, where the first prompt information is used to prompt the user whether to send the first message to the first satellite via the first communication application. That the first electronic device sends the first message to the first satellite via the first communication application specifically includes: The first electronic device receives and responds to a third operation of the user for the first prompt information, and the first electronic device sends the first message to the first satellite via the first communication application.

With reference to the second aspect, in a possible implementation, after the first electronic device receives the second operation of entering the first message on the satellite message editing page and sending the first message by the user, the method further includes: The first electronic device displays, in the first communication application, second prompt information indicating that the first message is already sent successfully.

With reference to the second aspect, in a possible implementation, that the first communication application of the first electronic device sends the first message to the second electronic device via the first satellite specifically includes: The first communication application of the first electronic device sends the first message to the second electronic device based on recipient information of the first message via the first satellite, where the recipient information of the first message is obtained by the first electronic device from contact information of the second application, or obtained from contact information of the first communication application, or obtained from a contact application.

With reference to the second aspect, in a possible implementation, the first electronic device further includes a first modem, and the first modem is configured to connect to the first satellite. That the first communication application of the first electronic device sends, in response to the second operation, the first message to the second electronic device via the first satellite specifically includes: In response to the second operation, the first communication application of the first electronic device sends the first message to the second electronic device via the first modem and the first satellite.

With reference to the second aspect, in a possible implementation, the second application is a map application or an instant messaging application.

According to a third aspect, this application provides an electronic device that is a first electronic device. The first electronic device includes one or more processors and one or more memories. The one or more memories are coupled to the one or more processors. The one or more memories are configured to store computer program code, and the computer program code includes computer instructions. When the one or more processors execute the computer instructions, the first electronic device is enabled to perform the method in any possible implementation of any one of the foregoing aspects.

According to a fourth aspect, this application provides a computer-readable storage medium, including instructions. When the instructions are run on a first electronic device, the first electronic device is enabled to perform the method in any possible implementation of any one of the foregoing aspects.

According to a fifth aspect, this application provides a computer program product. The computer program product may include computer instructions. When the computer instructions are run on a first electronic device, the first electronic device is enabled to perform the method in any possible implementation of any one of the foregoing aspects.

According to a sixth aspect, this application provides a chip. The chip is used in a first electronic device, and the chip includes one or more processors. The processor is configured to invoke computer instructions to enable the first electronic device to perform the method in any possible implementation of any one of the foregoing aspects.

It may be understood that, for beneficial effect of the second aspect to the sixth aspect, refer to the descriptions of the beneficial effect of the first aspect. Details are not described herein again in this application.

### BRIEF DESCRIPTION OF DRAWINGS

FIG. 1A is a diagram of a satellite communication system 10 according to this application;
FIG. 1B is a diagram of a satellite communication system 20 according to this application;
FIG. 1C is a diagram of a satellite communication system 30 according to this application;
FIG. 2A is a diagram of a hardware structure of an electronic device 100 according to this application;
FIG. 2B is a diagram of a software architecture of an electronic device 100 according to an embodiment of this application;
FIG. 2C is a diagram of another software architecture of an electronic device 100 according to an embodiment of this application;
FIG. 3A to FIG. 3I are diagrams of displaying a satellite network entry by a second application;
FIG. 3J to FIG. 3R and FIG. 4A to FIG. 4Y are diagrams of invoking a satellite communication capability of a first communication application by a map application to send a satellite message to a first satellite;
FIG. 5A to FIG. 5C are a schematic flowchart of a method for invoking a satellite communication capability of a first communication application by a second application to send a satellite message;
FIG. 6 is a schematic flowchart of a method for obtaining a message by an electronic device 200;
FIG. 7 is a schematic flowchart of another method for invoking a satellite communication capability of a first communication application by a second application to send a satellite message; and
FIG. 8 is a method schematic flowchart of a satellite communication method according to this application.

### DESCRIPTION OF EMBODIMENTS

Technical solutions in embodiments of this application are clearly described below with reference to accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application (application, APP) or an operating system and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of a graphical user interface (graphic user interface, GUI), and is a user interface that is related to a computer operation and that is displayed in a graphic manner. The user interface may be a visual interface element like text, an icon, a button, a menu, a tab, text box, a dialog box, a status bar, a navigation bar, or a widget that is displayed on a display of the electronic device.

In recent years, with rapid development of satellite communication technologies, satellite communication services are increasingly popular. Currently, communication between electronic devices via satellites is supported, and functions such as sending a message to a peer party and making a call can be implemented in an area without mobile network coverage.

An application on an electronic device 100 needs to be connected to a satellite, so that a user can use a communication function of the satellite via the application on the electronic device 100. For example, a first communication application on the electronic device 100 may be connected to a first satellite, so that the user may send a satellite message to another device based on the first satellite via the first communication application on the electronic device 100.

That the first communication application on the electronic device 100 is connected to the first satellite may mean that the first communication application is registered with a software module and a hardware module that are of the first satellite and that are preset on the electronic device 100, and the first communication application may send a satellite message to the first satellite via the software module and the hardware module that are of the first satellite and that are preset on the electronic device 100.

If a second application on the electronic device 100 is not connected to the first satellite, the second application on the electronic device 100 cannot communicate with the first satellite. In case of emergency, when the electronic device 100 is in a case in which there is no network, the user cannot seek help from the outside based on the second application via the first satellite. If the user cannot obtain, in a timely manner, an operation entry for sending a satellite message in the first communication application, and the user cannot seek help from the outside based on the first satellite via the first communication application, life safety of the user may be endangered.

This application provides a satellite communication method. After an electronic device 100 receives a user operation to start a second application, if the second application is not connected to a first satellite, the second application may query whether the electronic device 100 has a capability of communicating with the first satellite and whether the second application has permission to use the capability of communicating with the first satellite of the electronic device 100.

That the electronic device 100 has the capability of communicating with the first satellite may mean that a first communication application is installed on the electronic device 100, and the first communication application has been connected to the first satellite. The electronic device 100 may send a satellite message to the first satellite via the first communication application, or the electronic device 100 may receive, via the first communication application, a satellite message sent by the first satellite.

That the second application has permission to use the capability of communicating with the first satellite of the electronic device 100 may mean that the second application needs to be associated with the first communication application. An application associated with the first communication application may invoke a capability of the first communication application to communicate with the first satellite.

When the electronic device 100 has the capability of communicating with the first satellite and the second application has permission to use the capability of communicating with the first satellite of the electronic device 100, a first identifier may be displayed in the second application. The first identifier indicates that the second application may use the capability of communicating with the first satellite of the electronic device 100. The electronic device 100 may receive an input operation (for example, a tap operation) of a user for the first identifier, and in response to the input operation of the user, the electronic device 100 may start the first communication application, and send the satellite message to the first satellite via the first communication application.

Optionally, in addition to displaying the first identifier in the second application, the user may alternatively control, by using a physical button, a shortcut gesture operation, another shortcut manner, or the like, the second application to start the first communication application, and send the satellite message to the first satellite via the first communication application.

According to the method, when the second application on the electronic device 100 is not connected to the first satellite, the second application may invoke a satellite communication capability of the first communication application, and send a message to the first satellite via the first communication application, to implement communication between the second application and the first satellite. This reduces development workload of the application.

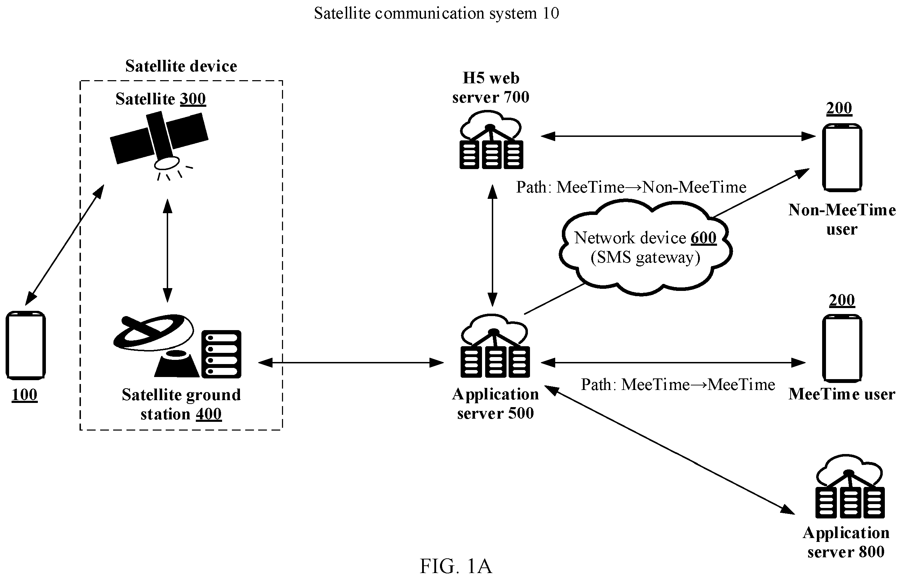

FIG. 1A is a diagram of a satellite communication system 10 according to this application.

As shown in FIG. 1A, the satellite communication system 10 includes a transmit device (for example, an electronic device 100), at least one receive device (for example, an electronic device 200), a plurality of application servers, and a satellite device. The plurality of application servers may include an application server 500 and an application server 800. The satellite device may be connected to the application server 500, and the application server 500 may be connected to the application server 800.

In this embodiment of this application, the electronic device 100 may send a satellite message to the electronic device 200 via the satellite device. The satellite message may include information such as text information, an image, a voice, a video, and an animation.

In some embodiments, as shown in FIG. 1A, the satellite device includes a first satellite (for example, a satellite 300) and a satellite ground station 400 of the first satellite. After the electronic device 100 sends the satellite message to the satellite 300, the satellite 300 sends the satellite message to the application server 500 via the satellite ground station 400.

For example, the first satellite may be the satellite 300 shown in FIG. 1A, the satellite 300 may be a geosynchronous orbit satellite, for example, a BeiDou satellite, or the satellite 300 may be a satellite of another type. A type of the satellite 300 is not specifically limited in embodiments of this application.

In some embodiments, a second application and a first communication application (for example, a MeeTime APP) are installed on the electronic device 100, a user (that is, a sender) of the electronic device 100 is a registered user of the first communication application, and the application server 500 may be a server of the first communication application. If the first communication application has a satellite communication function, the satellite device may be connected to the application server 500, the electronic device 100 may send a satellite message to the satellite device via the first communication application, the satellite device sends the satellite message to the application server 500, and the application server 500 may send the satellite message to a user (that is, a recipient) of the electronic device 200 or the application server 800 of the second application.

After the electronic device 200 starts the second application, if the second application has permission to use a capability of communicating with the first satellite of the electronic device 100, the electronic device 100 may display a first identifier in the second application. The first identifier indicates that the second application may use the capability of communicating with the first satellite of the electronic device 100. When the user needs to send a satellite message via the first satellite, the electronic device 100 may receive an input operation performed by the user on the first identifier, and display a satellite message editing interface.

Optionally, in addition to displaying the first identifier and the input operation for the first identifier in the second application, the user may alternatively trigger, by using a physical button, a shortcut gesture operation, another shortcut manner, or the like, the electronic device 100 to display the satellite message editing interface.

Optionally, the satellite message editing interface may be provided and displayed by the first communication application, or may be provided and displayed by the second application. This is not limited in this application.

A type of the first communication application is not specifically limited in embodiments of this application. In subsequent embodiments, an example in which the first communication application is the MeeTime APP is used for description.

The user may edit a satellite message in the satellite message editing interface, and confirm, by using a send option in the satellite message editing interface, to send an edited satellite message to the first satellite.

The electronic device 100 may send the satellite message to the satellite 300 via the first communication application, and then the satellite 300 sends the satellite message to the application server 500 via the satellite ground station 400.

In some embodiments, if a first communication application is installed on the electronic device 200, and a user (that is, the recipient) of the electronic device 200 is also a registered user of the first communication application, after receiving the satellite message sent by the satellite ground station 400, the application server 500 of the first communication application may send the satellite message to the first communication application of the electronic device 200 via a communication network. The user of the electronic device 200 may view the satellite message via the first communication application (for example, a MeeTime APP).

In some embodiments, if the user (that is, the recipient) of the electronic device 200 is not a registered user of the first communication application or the first communication application is not installed on the electronic device 200, as shown in FIG. 1A, the satellite communication system 10 may further include a network device 600 (for example, an SMS gateway) of a mobile cellular network of an operator. After receiving the satellite message sent by the satellite ground station 400, the application server 500 of the first communication application may send the satellite message to the network device 600, the network device 600 sends the satellite message to an SMS APP of the electronic device 200 via the mobile cellular network. The user of the electronic device 200 may view the satellite message via the SMS APP.

An account (for example, a mobile phone number) of the recipient may be a contact of the sender, or may be a public account of a national emergency rescue center.

The SMS gateway is used to resolve problems of messaging interworking between networks and operators and access of service providers, and provides a dynamic data exchange platform system. The network device 600 is not specifically limited in embodiments of this application. For example, the network device 600 may be a base station.

In some embodiments, as shown in FIG. 1A, the satellite communication system 10 further includes a web server (for example, an H5 web server 700). After receiving the satellite message sent by the satellite ground station 400, the application server 500 obtains a website link of the satellite message from the H5 web server 700, and sends the website link of the satellite message to the MeeTime APP or the SMS APP of the electronic device 200. The user of the electronic device 200 may view, on the electronic device 200, the satellite message indicated by the website link.

In some embodiments, the satellite communication system 10 further includes the application server 800. The application server 800 may be a server of the second application, and the application server 500 may also be connected to the application server 800. After receiving the satellite message sent by the satellite ground station 400, the application server 500 of the first communication application may send the satellite message to the application server 800 of the second application. After the application server 800 obtains the satellite message, the application server 800 may push the satellite message to the second application on the electronic device 200, a public platform of the second application, or the like. The public platform of the second application may include but is not limited to a website of the second application, an official account of the second application, or the like.

The communication network may include a local area network (local area networks, LAN) and/or a wide area network (wide area networks, WAN). The communication network may be implemented by using any known network communication protocol. The network communication protocol may be various wired or wireless communication protocols, such as Ethernet, a universal serial bus (universal serial bus, USB), a firewire (FIREWIRE), a global system for mobile communication (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth, wireless fidelity (wireless fidelity, Wi-Fi), NFC, voice over Internet protocol (voice over Internet protocol, VoIP), a communication protocol supporting a network slice architecture, or any other suitable communication protocol.

The electronic device 100 and the electronic device 200 each may be a mobile phone, a tablet computer, a desktop computer, a laptop computer, a handheld computer, a notebook computer, an ultra-mobile personal computer (ultra-mobile personal computer, UMPC), or a netbook, or may be a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (like a smart band), a vehicle-mounted device, a smart home device (like a smart television, a smart screen, or a large-screen device), and/or a smart city device. A specific type of the electronic device 100 is not specially limited in embodiments of this application. A terminal device may also be referred to as an electronic device, a terminal, or the like.

The application server 500 and the application server 800 each may be a server, a server cluster including a plurality of servers, or a cloud computing center. The application server 500 and the application server 800 in embodiments of this application may also be referred to as cloud servers, clouds, or cloud sides. For the H5 web server 700, refer to related descriptions of the application server 500 and the application server 800. Details are not described herein again.

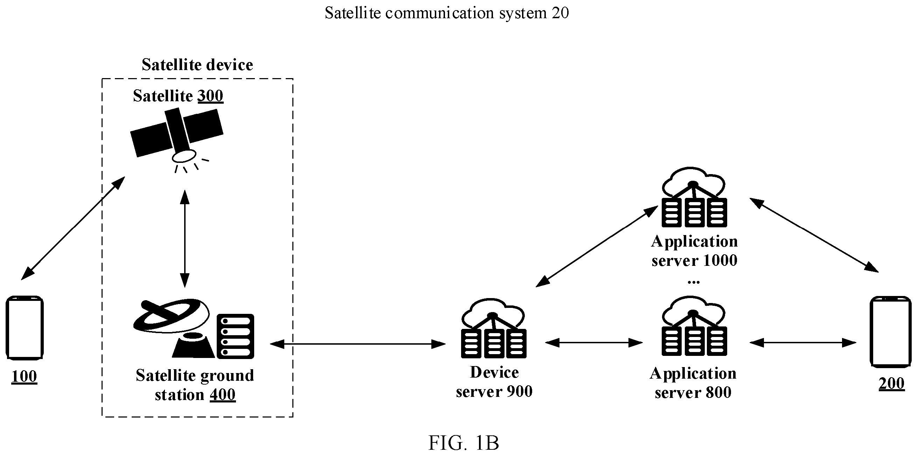

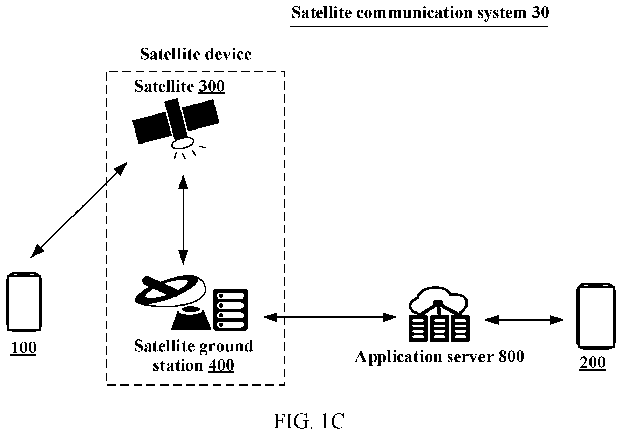

It should be understood that FIG. 1A is merely a diagram of a system structure of a communication system provided in embodiments of this application, and does not constitute a specific limitation on the satellite communication system 10. The satellite communication system 10 may include more or fewer devices than those shown in the figure, for example, may further include a wireless relay device and a wireless backhaul device (not shown in FIG. 1). This is not limited herein.

FIG. 1B is a diagram of a satellite communication system 20 according to this application.

As shown in FIG. 1B, the satellite communication system 20 includes a transmit device (for example, an electronic device 100), at least one receive device (for example, an electronic device 200), a device server (for example, a device server 900), one or more application servers (for example, an application server 800 and an application server 1000), and a satellite device. In this embodiment of this application, the electronic device 100 may send a satellite message to the electronic device 200 via the satellite device. The satellite message may include information such as text information, an image, a voice, a video, and an animation.

In some embodiments, as shown in FIG. 1B, the satellite device includes a first satellite (for example, a satellite 300) and a satellite ground station 400 of the first satellite. After the electronic device 100 sends the satellite message to the satellite 300, the satellite 300 sends the satellite message to the device server 900 via the satellite ground station 400.

For example, the first satellite may be the satellite 300 shown in FIG. 1B, the satellite 300 may be a geosynchronous orbit satellite, for example, a BeiDou satellite, or the satellite 300 may be a satellite of another type. A type of the satellite 300 is not specifically limited in embodiments of this application.

In some embodiments, as shown in FIG. 1B, the device server 900 may be a server corresponding to the electronic device 100, for example, a device server of the electronic device 100. Electronic devices of a same manufacturer may use a same device server, and the satellite device may be connected to the device server. For example, the device server of the electronic device 100 is the device server 900, and the satellite device may be connected to the device server 900. If there are a plurality of device servers, the satellite device may be connected to the plurality of device servers.

The device server 900 may be connected to the one or more application servers. For example, the device server 900 may be connected to the application server 800 and the application server 1000, and different applications have different application servers. For example, the application server 800 may be a server of a second application, the application server 1000 may be a server of a third application, and the second application and the third application are different.

After the satellite device is connected to the device server 900, a user performs an in-application operation on the electronic device 100 to send a satellite message.

In some embodiments, the second application and a first communication application (for example, a MeeTime APP) are installed on the electronic device 100, and a user (that is, a sender) of the electronic device 100 is a registered user of the first communication application. After the electronic device 100 starts the second application, if the second application has permission to use a capability of communicating with the first satellite of the electronic device 100, the electronic device 100 may display a first identifier in the second application. The first identifier indicates that the second application may use the capability of communicating with the first satellite of the electronic device 100. When the user needs to send a satellite message via the first satellite, the electronic device 100 may receive an input operation performed by the user on the first identifier, and display a satellite message editing interface.

Optionally, in addition to displaying the first identifier and the input operation for the first identifier in the second application, the user may alternatively trigger, by using a physical button, a shortcut gesture operation, another shortcut manner, or the like, the electronic device 100 to display the satellite message editing interface.

Optionally, the satellite message editing interface may be provided and displayed by the first communication application, or may be provided and displayed by the second application. This is not limited in this application.

A type of the first communication application is not specifically limited in embodiments of this application. In subsequent embodiments, an example in which the first communication application is the MeeTime APP is used for description.

The user may edit a satellite message in the satellite message editing interface, and confirm, by using a send option in the satellite message editing interface, to send an edited satellite message to the first satellite.

The electronic device 100 may send the satellite message and a second application identifier to the satellite 300 via the first communication application, and then the satellite 300 sends the satellite message and the second application identifier to the device server 900 via the satellite ground station 400.

After receiving the satellite message and the second application identifier, the device server 900 may send the satellite message to the application server 800 based on the second application identifier. If a second application is installed on the electronic device 200, the application server 800 may send the satellite message to the second application on the electronic device 200, and the second application on the electronic device 200 may receive the satellite message sent by the electronic device 100.

In the foregoing manner, the electronic device 100 may alternatively send the satellite message to the electronic device 200 via the third application.

In some embodiments, the electronic device 100 may further send a recipient to the device server 900 via the satellite 300 and the satellite ground station 400.

Optionally, after the device server 900 obtains the satellite message and the recipient, the device server 900 may send the satellite message and the recipient to a network device 600, and the network device 600 may send the satellite message to an SMS application on the electronic device 200 based on the recipient.

Optionally, if a first communication application is installed on the electronic device 200, and a user (that is, the recipient) of the electronic device 200 is also a registered user of the first communication application, after the device server 900 obtains the satellite message and the recipient, the device server 900 may send the satellite message and the recipient to a server of the first communication application, for example, an application server 500 (not shown in FIG. 1B). Then, the server of the first communication application sends the satellite message to the first communication application on the electronic device 200 based on the recipient. The user of the electronic device 200 may view the satellite message via the first communication application (for example, a MeeTime APP).

For how the server of the first communication application sends a satellite to the electronic device 200, refer to the descriptions in the embodiment in FIG. 1A.

FIG. 1C is a diagram of a satellite communication system 30 according to this application.

As shown in FIG. 1C, the satellite communication system 20 includes a transmit device (for example, an electronic device 100), at least one receive device (for example, an electronic device 200), an application server (for example, an application server 800, and a satellite device. In this embodiment of this application, the electronic device 100 may send a satellite message to the electronic device 200 via the satellite device. The satellite message may include information such as text information, an image, a voice, a video, and an animation.

In some embodiments, as shown in FIG. 1C, the satellite device includes a first satellite (for example, a satellite 300) and a satellite ground station 400 of the first satellite. After the electronic device 100 sends the satellite message to the satellite 300, the satellite 300 sends the satellite message to the application server 800 via the satellite ground station 400.

For example, the first satellite may be the satellite 300 shown in FIG. 1B, the satellite 300 may be a geosynchronous orbit satellite, for example, a BeiDou satellite, or the satellite 300 may be a satellite of another type. A type of the satellite 300 is not specifically limited in embodiments of this application.

In some embodiments, as shown in FIG. 1C, the satellite device may be connected to the application server 800, and the application server 800 may be a server of a second application.

After the electronic device 100 starts the second application, if the second application is connected to the first satellite, in other words, the second application has a capability of communicating with the satellite 300, the electronic device 100 may receive a satellite message edited and sent by a user in the second application.

The electronic device 100 may send the satellite message and a second application identifier to the satellite 300 via the second application, and then the satellite 300 sends the satellite message and the second application identifier to the application server 800 via the satellite ground station 400.

After the satellite message and the second application identifier are received, if a second application is installed on the electronic device 200, the application server 800 may send the satellite message to the second application on the electronic device 200, and the second application on the electronic device 200 may receive the satellite message sent by the electronic device 100.

In some embodiments, the electronic device 100 may further send a recipient to the application server 800 via the satellite 300 and the satellite ground station 400.

After obtaining the satellite message and the recipient, the application server 800 may send the satellite message and the recipient to a network device 600, and the network device 600 may send, based on the recipient, the satellite message to an SMS application and/or a first communication application on the electronic device 200.

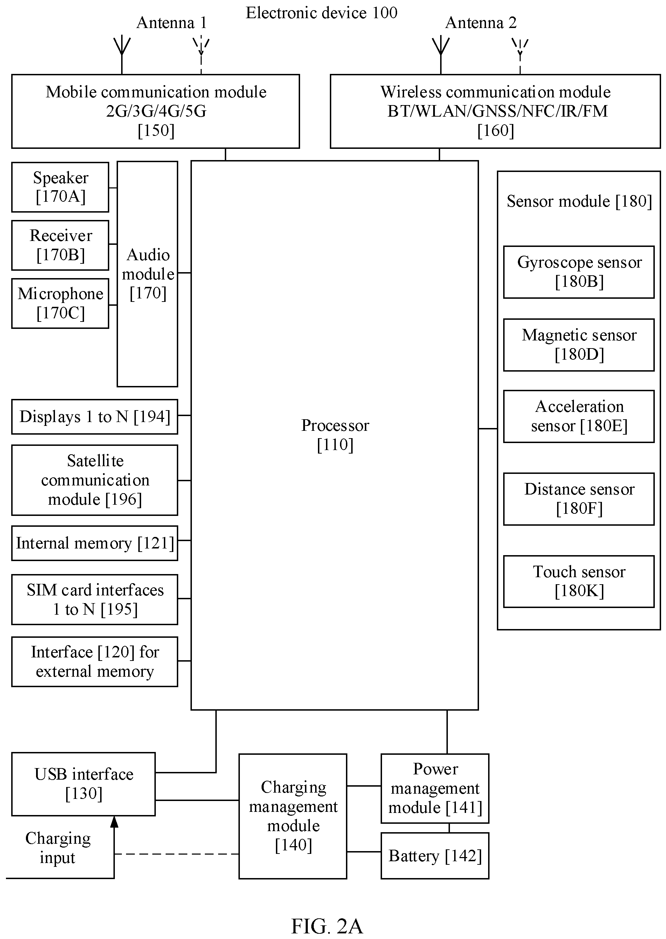

FIG. 2A is a diagram of a hardware structure of an electronic device 100 according to this application.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a sensor module 180, a display 194, a subscriber identity module (subscriber identification module, SIM) card interface 195, a satellite communication module 196, and the like. The sensor module 180 may include one or more sensors, for example, a gyroscope sensor 180B, a magnetic sensor 180D, an acceleration sensor 180E, a distance sensor 180F, a touch sensor 180K, and the like. In some embodiments, the sensor module 180 may further include one or more of sensors such as a pressure sensor, a barometric pressure sensor, an optical proximity sensor, a fingerprint sensor, a temperature sensor, an ambient optical sensor, and a bone conduction sensor.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency. In some embodiments, the processor 110 may include one or more interfaces, for example, a universal serial bus (universal serial bus, USB) interface.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio via the headset. The interface may be further configured to connect to another electronic device like an AR device.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device via the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented via the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave via the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation via the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (blue tooth, BT), a global navigation satellite system (global navigation satellite system, GNSS), frequency modulation (frequency modulation, FM), a near field communication (near fieldcommuni cation, NFC) technology, an infrared (infrared, IR) technology, and the like. The wireless communication module 160 may be one or more components integrating at least one communication processing module. The wireless communication module 160 receives an electromagnetic wave via the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation via the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communication (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diodes, QLED), or the like. In some embodiments, the electronic device 100 may include one or N displays 194, where N is a positive integer greater than 1.

The internal memory 121 may include one or more random access memories (random access memory, RAM) and one or more non-volatile memories (non-volatile memory, NVM).

The random access memory may be directly read and written by the processor 110, may be configured to store executable programs (such as machine instructions) of an operating system or another running program, and may further be configured to store data of a user and an application.

The non-volatile memory may also store the executable program, the data of the user and the application, and the like, and may be loaded into the random access memory in advance, to be directly read and written by the processor 110.

The interface 120 for external memory may be configured to connect to an external non-volatile memory, to expand a storage capability of the electronic device 100. The external non-volatile memory communicates with the processor 110 through the interface 120 for external memory, to implement a data storage function. For example, files such as music and videos are stored in the external non-volatile memory.

The electronic device 100 may implement an audio function, for example, call and recording, via the audio module 170, the speaker 170A, the receiver 170B, the microphone 170C, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode via the speaker 170A.

The receiver 170B, also referred to as an "earpiece", is configured to convert an electrical audio signal into a sound signal. When a call is answered or speech information is received via the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The gyroscope sensor 180B may be configured to determine a moving posture of the electronic device 100. In some embodiments, an angular velocity of the electronic device 100 around three axes (namely, axes x, y, and z) may be determined via the gyroscope sensor 180B. The gyroscope sensor 180B may be configured to implement image stabilization during photographing. For example, when a shutter is pressed, the gyroscope sensor 180B detects an angle at which the electronic device 100 jitters, calculates, based on the angle, a distance for which a lens module needs to compensate, and allows a lens to cancel the jitter of the electronic device 100 through reverse motion, to implement image stabilization. The gyroscope sensor 180B may further be used in a navigation scenario and a somatic game scenario.

The magnetic sensor 180D includes a Hall sensor. The electronic device 100 may detect opening and closing of a flip cover via the magnetic sensor 180D.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure a distance in an infrared manner or a laser manner. In some embodiments, in a photographing scenario, the electronic device 100 may measure a distance via the distance sensor 180F to implement quick focusing.

The touch sensor 180K is also referred to as a "touch component". The touch sensor 180K may be disposed in the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided via the display 194. In some other embodiments, the touch sensor 180K may alternatively be disposed on a surface of the electronic device 100 at a location different from that of the display 194.

In some embodiments, the electronic device 100 may further include one or more of the following: a button, a motor, and an indicator. The button may include a power button, a volume button, and the like. The button may be a mechanical button, or may be a touch button. The electronic device 100 may receive a key input, and generate a key signal input related to a user setting and function control of the electronic device 100. The motor may generate a vibration prompt. The indicator may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

The satellite communication module 196 may provide a satellite communication solution applied to the electronic device 100. The satellite communication module 196 may be one or more components integrating at least one communication processing module, for example, a satellite communication modem (modem) and an antenna. The satellite communication module 196 may modulate a signal via the satellite communication modem, and radiate a modulated signal via the antenna. In some embodiments, the satellite communication module 196 may also receive, via the antenna, a signal sent by a satellite, demodulate the received signal via the satellite communication modem, and send a processed signal to the processor 110.

It should be noted that for a hardware structure of the electronic device 100, refer to the hardware structure of the electronic device 100. Details are not described herein again in this application.

FIG. 2B is a diagram of a software architecture of the electronic device 100 according to an embodiment of this application.

As shown in FIG. 2B, the software architecture of the electronic device 100 may include an application layer, a framework layer, a hardware abstraction layer (hardwareabstractlayer, HAL), and a hardware layer.

The application layer may include one or more applications such as a first communication application and a second application. The first communication application may be a MeeTime APP. The first communication application may be connected to a satellite communication module and a satellite alignment service module. The first communication application may communicate with a first satellite, for example, receive or send a satellite message. The second application may be a map application, an outdoor sports application, an instant messaging application, a travel application, or the like. When the second application is not connected to the first satellite, the second application may communicate with the first satellite via the first communication application by using a capability of communicating with the first satellite of the first communication application, for example, receive or send the satellite message.

The framework layer may include the satellite communication module and the satellite alignment service module.

After it is detected that a satellite communication mode is enabled, the first communication application may deliver an instruction to the satellite alignment service module. The instruction is used to instruct the satellite alignment service module to obtain satellite data, and the satellite data may include an azimuth angle, an elevation angle, and satellite signal strength of the satellite relative to the device. The first communication application may further display satellite alignment guidance based on the satellite data sent by the satellite alignment service module, to guide a user to establish a communication connection between the electronic device 100 and the satellite.

Optionally, the azimuth angle of the electronic device 100 relative to the satellite may be obtained via a compass in the electronic device 100. The elevation angle of the electronic device 100 relative to the satellite may be obtained via a sensor like a gyroscope in the electronic device 100. A satellite signal may be obtained by the electronic device 100 via an antenna or another module.

After obtaining a satellite message entered by the user, the first communication application may send the satellite message to the satellite communication module. Then, the satellite communication module sends the satellite message to the HAL layer and the hardware layer, and the hardware layer sends the satellite message to the first satellite.

Optionally, if the satellite message is entered by the user in the second application, the second application may send the satellite message to the first communication application. Optionally, the satellite message may alternatively be entered by the user in the first communication application.

Optionally, a satellite message that is sent by the first satellite and that is sent by another device to the first satellite may be received according to a reverse path, and the message sent by the another device is sent to the first communication application.

The HAL may include a radio interface layer (radiointerfacelayer, RIL). The RIL may receive a message transmitted by the satellite communication module, and deliver an instruction to a corresponding modem. The RIL may include RIL submodules corresponding to one or more communication modes, for example, a cellular interface layer (Vendor-RIL) corresponding to a cellular communication mode and a satellite interface layer (satellite-RIL) corresponding to the satellite communication mode. The vendor-RIL and the satellite-RIL are independent of each other. The vendor-RIL may deliver an AT instruction to a cellular modem at the hardware layer. The satellite-RIL may deliver an AT instruction to a satellite modem at the hardware layer. In addition, the RIL may further include modules, for example, a radio interface layer that supports a C language (RILC), a Lib-RIL, and a common-RIL.

In some embodiments, the satellite-RIL may alternatively be located in the vendor-RIL. When the satellite-RIL is in an active state, the vendor-RIL is also in an active state; or when the satellite-RIL is in an inactive state, the vendor-RIL may be in an active state or an inactive state.

The software architecture of the electronic device 100 may interact with one or more pieces of hardware in the electronic device 100. The one or more pieces of hardware may include the cellular modem, the satellite modem, a Bluetooth (bluetooth, BT) module, a high-fidelity (high-fidelity, HiFi) module, a sensor module, and a global positioning service (globalPositionservice, GPS) module. The cellular modem and the satellite modem are independent of each other. The HiFi module may include a microphone (mic), a speaker (speaker), a codec (codec), and a power amplifier (power amplifier, PA).

In some embodiments, the satellite modem may alternatively be located in the cellular modem. When the satellite modem is in an active state, the cellular modem is also in an active state; or when the satellite modem is in an inactive state, the cellular modem may be in an active state or an inactive state.

In some embodiments, the satellite modem and the cellular modem may alternatively invoke the HiFi module to implement a voice call function. In some embodiments, if the electronic device 100 is further connected to another electronic device like a Bluetooth headset via the Bluetooth module in a call process, the satellite modem and the cellular modem may alternatively invoke the Bluetooth module (not shown in the figure).

After the satellite communication mode is enabled, the electronic device 100 may determine a location of the electronic device 100 via the GPS module. Then, the electronic device 100 may start satellite alignment guidance. For a specific satellite alignment guidance manner, refer to descriptions in the following embodiment.

It should be noted that the foregoing modules may alternatively use other Chinese names, and the Chinese names of the modules are not limited in this application.

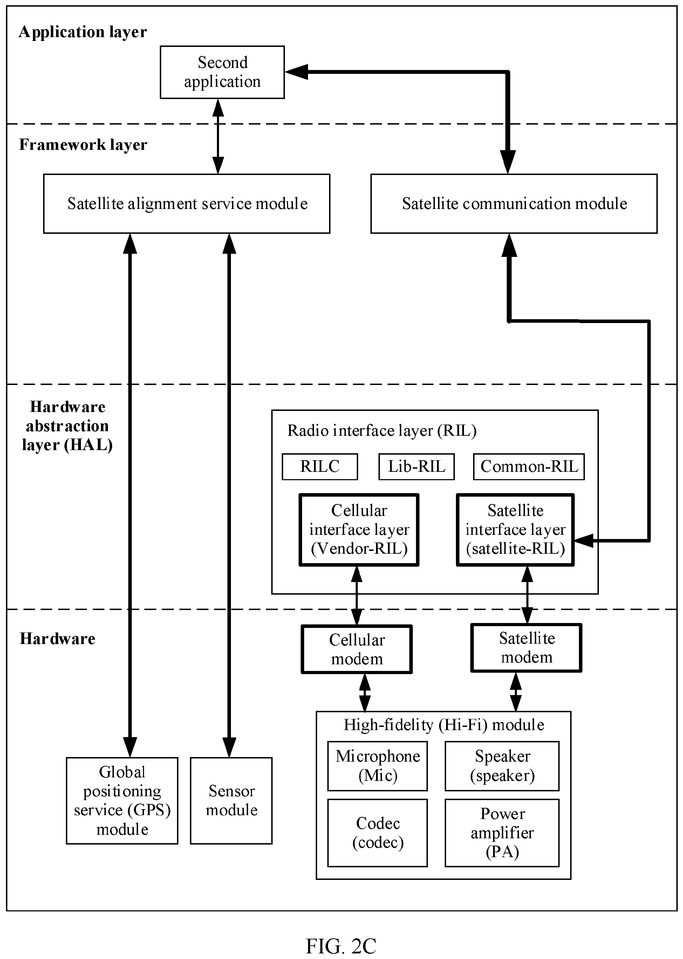

FIG. 2C is a diagram of another software architecture of the electronic device 100 according to an embodiment of this application.

The software architecture of the electronic device 100 shown in FIG. 2C is similar to the software architecture of the electronic device 100 shown in FIG. 2B. For details, refer to the descriptions in the embodiment of FIG. 2B.

A difference between FIG. 2C and FIG. 2B lies in that, in FIG. 2C, a second application also has a satellite communication capability. In other words, the second application is connected to a first satellite, and the second application may directly communicate with the first satellite without using a satellite communication capability of a first communication application.

As shown in FIG. 2C, after it is detected that a satellite communication mode is enabled, the second application may deliver an instruction to a satellite alignment service module. The instruction is used to instruct the satellite alignment service module to obtain satellite data, and the satellite data may include an azimuth angle, an elevation angle, and satellite signal strength of the satellite relative to the device. The second application may further display satellite alignment guidance based on the satellite data sent by the satellite alignment service module, to guide a user to establish a communication connection between the electronic device 100 and the satellite.

After the user edits and sends a satellite message in the second application, the second application may send the satellite message to a satellite communication module. Then, the satellite communication module sends the satellite message to an HAL layer and a hardware layer, and the hardware layer sends the satellite message to the first satellite.

**With reference to application scenarios, the following specifically describes the satellite communication method provided in embodiments of this application.**

**A first communication application and a second application are installed on an electronic device 100. The first communication application may be connected to a first satellite, and the first communication application may send a satellite message to the first satellite. If the second application is not connected to the first satellite, the second application may invoke the first communication application to send a satellite message to the first satellite, so that the application that is not connected to the satellite also has a capability of sending a satellite message.**

**The following describes how the second application invokes a satellite communication capability of the first communication application to send the satellite message.**

**First, UIs in which the second application invokes the satellite communication capability of the first communication application to send the satellite message are described.**

**FIG. 3A to FIG. 3I** **are diagrams of displaying a satellite network entry by a second application.**

**For example, the second application may be a settings application.**

For example, as shown in FIG. 3A, an electronic device 100 displays a home screen. A page on which application icons are placed is displayed on the home screen. The page includes a plurality of application icons (for example, a weather application icon, a stock application icon, a calculator application icon, a settings application icon, an email application icon, a document application icon, a social application icon, a browser application icon, a map application icon, a music application icon, a chat application icon, and a MeeTime APP icon). A page indicator is further displayed below the page on which the application icons are placed, to indicate a total quantity of pages on the home screen and a location relationship between a currently displayed page and another page. For example, the home screen may include three pages. A white dot in the page indicator is located at a third location from left, indicating that the currently displayed page is a third page from left in the three pages. Optionally, a status bar is further displayed above the page on which the application icons are placed. The status bar may include information such as a strength indicator of a communication signal, a battery level value, and time. It should be noted that the strength indicator of the communication signal may indicate signal strength of a cellular network signal received by the electronic device 100. It may be seen from FIG. 3A that the electronic device 100 currently cannot receive the cellular network signal. Further optionally, there may be a dock (dock) area below the page indicator. The dock area may include one or more dock icons (for example, a phone application icon, an SMS application icon, a contact application icon, and a camera application icon). The one or more dock icons in the dock area can remain displayed during page switching.

The electronic device 100 may receive and respond to an operation performed by a user on the settings application icon on the home screen, for example, a tap operation, and display a main interface of a settings application shown in FIG. 3B.

As shown in FIG. 3B, the main interface of the settings application may include one or more setting entries, for example, a Bluetooth entry, a mobile network entry, and a satellite network entry 3001. Each setting entry may be used to trigger the electronic device 100 to display a corresponding function setting interface.

In FIG. 3B, when the electronic device 100 has a satellite communication capability and the settings application has permission to use the satellite communication capability of the electronic device 100, the electronic device 100 may display the satellite network entry 3001 in the main interface of the settings application. The satellite network entry 3001 is used to inform the user that a satellite message may be sent to a first satellite via the settings application.

Optionally, not limited to displaying the satellite network entry 3001 shown in FIG. 3B in the settings application, the electronic device 100 may alternatively display the satellite network entry 3001 at a location of the settings application. A display location of the satellite network entry 3001 in the settings application is not limited in this application.

In some embodiments, when the electronic device 100 does not have the satellite communication capability, or the electronic device 100 has the satellite communication capability but the settings application does not have permission to use the satellite communication capability of the electronic device 100, the electronic device 100 may not display the satellite network entry 3001 in the main interface of the settings application.

**For example, the second application may alternatively be an instant messaging application.**

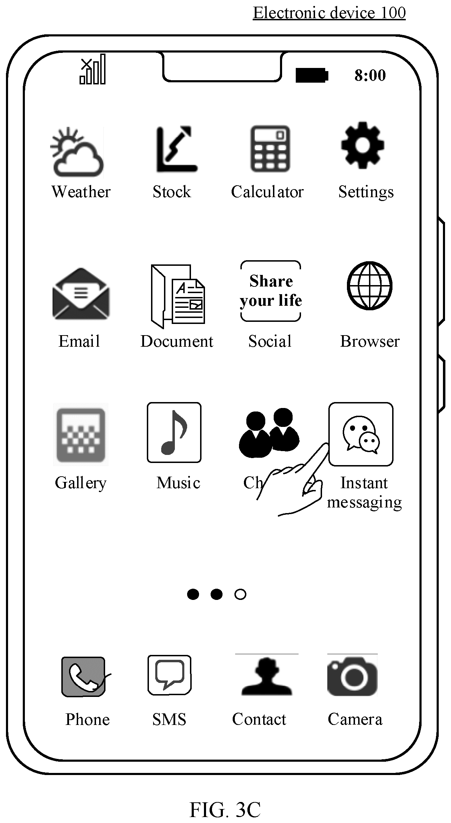

For example, as shown in FIG. 3C, an electronic device 100 displays a home screen. For descriptions of the home screen of the electronic device 100, refer to the descriptions in FIG. 3A. Details are not described herein again in this application.

As shown in FIG. 3C, the electronic device 100 may receive and respond to an operation performed by a user on a MeeTime APP icon on the home screen, for example, a tap operation, and display a main interface of a MeeTime APP shown in FIG. 3D.

As shown in FIG. 3D, a dialog box with contacts is displayed in the main interface of the MeeTime APP.

In FIG. 3D, when the electronic device 100 has a satellite communication capability and the MeeTime APP has permission to use the satellite communication capability of the electronic device 100, the electronic device 100 may display a satellite network entry 3001 in the main interface of the MeeTime APP. The satellite network entry 3001 is used to inform the user that a satellite message may be sent to a first satellite via the MeeTime APP.

Optionally, not limited to displaying the satellite network entry 3001 shown in FIG. 3D in the main interface of the MeeTime APP, the electronic device 100 may alternatively display the satellite network entry 3001 in another interface of the MeeTime APP. For example, the electronic device 100 may display the satellite network entry 3001 in a setting interface of the MeeTime APP. A display location of the satellite network entry 3001 in the MeeTime APP is not limited in this application.

In some embodiments, when the electronic device 100 does not have the satellite communication capability, or the electronic device 100 has the satellite communication capability but the MeeTime APP does not have permission to use the satellite communication capability of the electronic device 100, the electronic device 100 may not display the satellite network entry 3001 in the main interface of the MeeTime APP.

**For example, the second application may alternatively be a map application.**

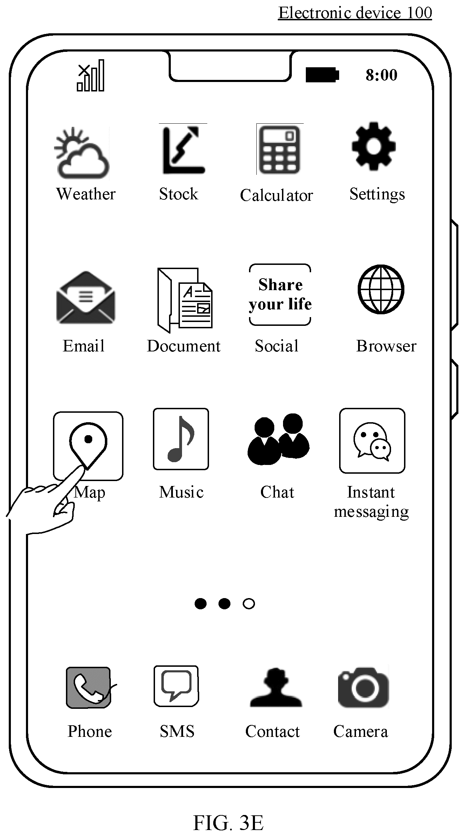

For example, as shown in FIG. 3E, an electronic device 100 displays a home screen. For descriptions of the home screen of the electronic device 100, refer to the descriptions in FIG. 3A. Details are not described herein again in this application.

As shown in FIG. 3E, the electronic device 100 may receive and respond to an operation performed by a user on a map application icon on the home screen, for example, a tap operation, and display a main interface of a map application shown in FIG. 3F.

As shown in FIG. 3F, map information near a location of the electronic device 100 is displayed in the main interface of the map application, for example, road information and building information.

In FIG. 3F, when the electronic device 100 has a satellite communication capability and the map application has permission to use the satellite communication capability of the electronic device 100, the electronic device 100 may display a satellite network entry 3001 in the main interface of the map application. The satellite network entry 3001 is used to inform the user that a satellite message may be sent to a first satellite via the map application.

Optionally, not limited to displaying the satellite network entry 3001 shown in FIG. 3F in the main interface of the map application, the electronic device 100 may alternatively display the satellite network entry 3001 in another interface of the map application. For example, the electronic device 100 may display the satellite network entry 3001 in a setting interface of the map application. A display location of the satellite network entry 3001 in the map application is not limited in this application.

In some embodiments, when the electronic device 100 does not have the satellite communication capability, or the electronic device 100 has the satellite communication capability but the map application does not have permission to use the satellite communication capability of the electronic device 100, the electronic device 100 may not display the satellite network entry 3001 in the main interface of the map application.

Not limited to the settings application, the MeeTime APP, and the map application, the second application may alternatively be another application, for example, a travel application. An application type of the second application is not limited in this application. In the following embodiments of this application, an example in which the second application is the map application is used for description.

**In some embodiments, the second application may alternatively be a system application. The system application may include but is not limited to a home screen application, the settings application shown in** **FIG. 3A** **and** **FIG. 3B****, a control center, and the like.**

**For example, the second application may alternatively be a home screen application.**

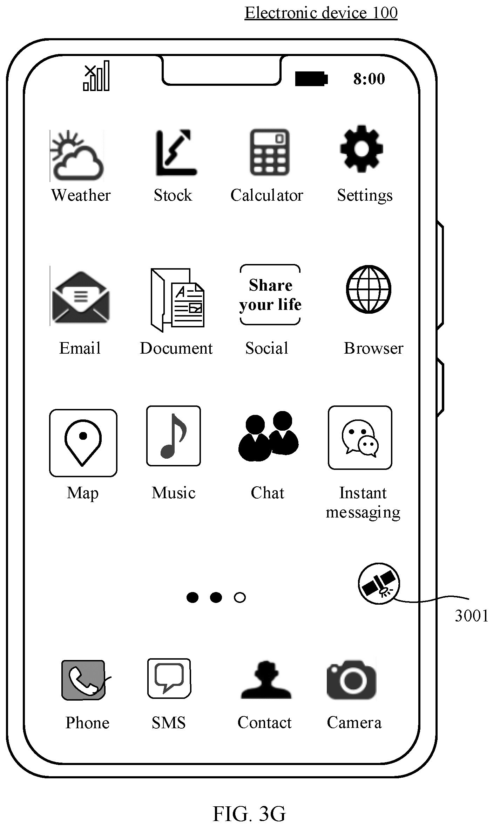

When the home screen application has a satellite communication capability and a map application has permission to use the satellite communication capability of the electronic device 100, the electronic device 100 may display, on a home screen, a satellite network entry 3001 shown in FIG. 3G. The satellite network entry 3001 is used to inform a user that the home screen application has the satellite communication capability. The electronic device 100 may receive an input operation performed by the user on the satellite network entry 3001, for example, a tap operation. In response to the input operation of the user, the home screen application on the electronic device 100 may start a first communication application, and send a satellite message via the first communication application.

In some embodiments, when the electronic device 100 does not have the satellite communication capability, or the electronic device 100 has the satellite communication capability but the home screen application does not have permission to use the satellite communication capability of the electronic device 100, the electronic device 100 may alternatively not display, on the home screen, the satellite network entry 3001 shown in FIG. 3G.

**For example, the second application may alternatively be a control center.**

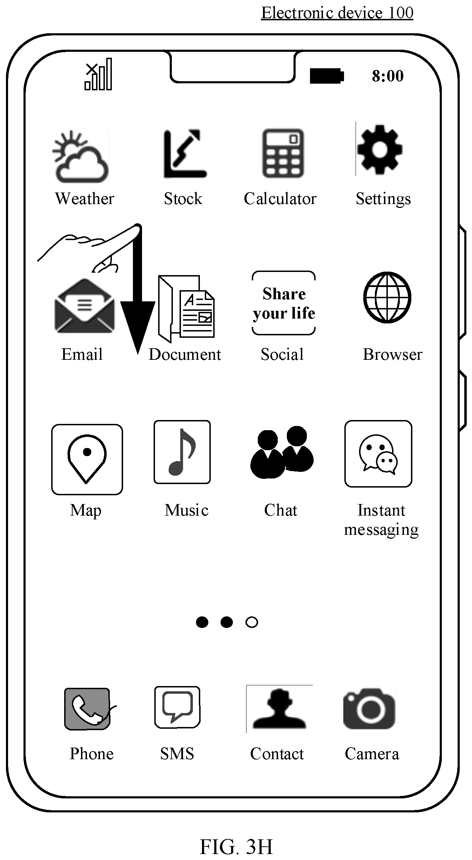

As shown in FIG. 3H, an electronic device 100 may receive and respond to an operation of sliding down a home screen by a user, and display a control center interface shown in FIG. 3I.

The control center interface may include one or more function on/off controls, for example, a flashlight control, a share control, an airplane mode control, and a satellite network entry 3001. The satellite network entry 3001 is used to inform the user that a satellite message may be sent to a first satellite via a control center.

In some embodiments, the control center may alternatively not display, in the control center interface, the satellite network entry 3001 shown in FIG. 3I. When the user needs to use a satellite communication function, the electronic device 100 may receive an input operation performed by the user on a physical button on the electronic device 100, for example, a double-tap operation on a side button (for example, a power button), or the electronic device 100 may receive a shortcut gesture operation of the user, or the like. In response to the operation of the user, the control center on the electronic device 100 may start a first communication application, and send a satellite message via the first communication application.

In some embodiments, when the electronic device 100 does not have a satellite communication capability, or the electronic device 100 has the satellite communication capability but the control center does not have permission to use the satellite communication capability of the electronic device 100, the electronic device 100 may alternatively not display, in the control center interface, the satellite network entry 3001 shown in FIG. 3H.

It should be noted that the foregoing display manners of the satellite network entry 3001 in different applications may be mutually used, and do not constitute a limitation.

In some embodiments, when the second application is a third-party application or the system application, not limited to an operation for the satellite network entry 3001, the user may alternatively quickly control, by using the physical button, the shortcut gesture operation, another shortcut manner, or the like, the second application to invoke a satellite communication capability of the first communication application to send the satellite message.

**In some embodiments, after the map application displays the satellite network entry 3001, the electronic device 100 may receive an input operation performed by the user on the satellite network entry 3001, for example, a tap operation, and the map application may invoke a satellite communication capability of a first communication application to send the satellite message to the first satellite.**

**FIG. 3J to FIG. 3R** **and** **FIG. 4A to FIG. 4Y** **are diagrams of invoking a satellite communication capability of a first communication application by a map application to send a satellite message to a first satellite.**

For example, as shown in FIG. 3J, an electronic device 100 may receive an input operation performed by a user on a satellite network entry 3001, for example, a tap operation. In response to the input operation of the user, the electronic device 100 may display a satellite message editing page 4002 shown in FIG. 3K.

Optionally, the satellite message editing page 4002 may be a satellite message editing interface provided by the map application.

As shown in FIG. 3K, the satellite message editing page 4002 includes a carry location option 4003, a picture selection option 4004, a message editing box 4005, an emoji selection option 4006, a send option 4007, and a plurality of user-defined message options. For example, the plurality of user-defined message options may include a user-defined message option 4008, a user-defined message option 4009, and a user-defined message option 4010.

The carry location option 4003 is used to display location information of the electronic device 100 in the message editing box 4005 after being selected, to quickly send a location of the electronic device 100 to another device.

The picture selection option 4004 is used by the user to select a to-be-sent picture and/or video from a gallery, or obtain a to-be-sent picture and/or video through photographing with a camera of the electronic device 100, and display, in the message editing box 4005, the to-be-sent picture and/or video that are/is selected by the user or the to-be-sent picture and/or video that are/is obtained through photographing with the camera of the electronic device 100, so that the electronic device 100 quickly sends the picture and/or video to another device, and a user of the another device may quickly obtain an environment around the electronic device 100 based on the picture and/or video sent by the electronic device 100.

The message editing box 4005 is used to display satellite messages such as to-be-sent text, a to-be-sent picture, a to-be-sent video, and a to-be-sent emoji. Alternatively, the user may tap the message editing box 4005, the electronic device 100 may display a text input box, and the user may enter to-be-sent text in the message editing box 4005 by using the text input box.

The emoji selection option 4006 is used by the user to select a to-be-sent emoji from a preset emoji.

The send option 4007 is used to send, to another electronic device via the first satellite, a to-be-sent satellite message displayed in the message editing box 4005. The send option 4007 shown in FIG. 3K is grayed out to indicate that the send option 4007 is not operable currently.

The user-defined message option 4008, the user-defined message option 4009, and the user-defined message option 4010 may be user-defined messages provided by the map application. The user may quickly select a user-defined message and send the user-defined message to another electronic device via the first satellite.

Optionally, different applications may provide different user-defined messages.

The user may edit, on the satellite message editing page 4002, a to-be-sent satellite message and a recipient of the satellite message.

In some embodiments, the user may select the recipient of the satellite message from a contact application of the electronic device 100.

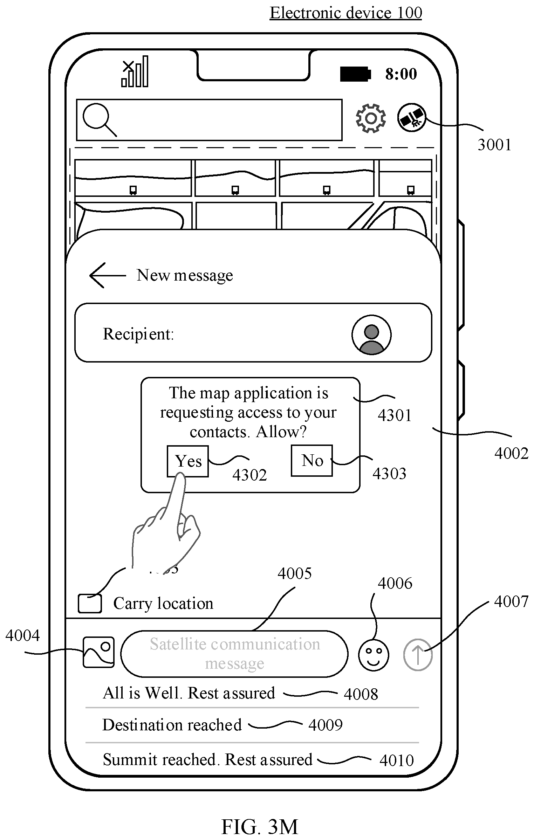

As shown in FIG. 3L, the electronic device 100 may receive and respond to a selection operation performed by the user on a recipient option, and display a prompt box 4301 shown in FIG. 3M. The prompt box 4301 includes text "The map application is requesting access to your contacts. Allow?". The prompt box 4301 indicates whether the user allows the map application to access the contact application of the electronic device 100, and obtain contact information. The prompt box 4301 further includes a yes option 4302 and a no option 4303. The user may allow, by using the yes option 4302, the map application to access the contact application of the electronic device 100, and obtain the contact information, or the user may not allow, by using the no option 4303, the map application to access the contact application of the electronic device 100.

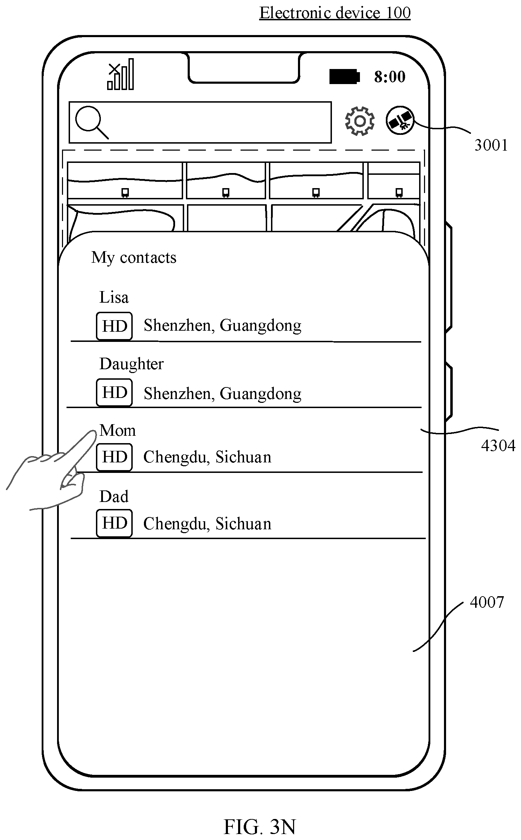

For example, as shown in FIG. 3M, the electronic device 100 may receive and respond to an input operation performed by the user on the yes option 4302 in the prompt box 4301, for example, a tap operation. In response to the input operation of the user, the electronic device 100 may display a contact page 4304 shown in FIG. 3N. The contact page 4304 shows a plurality of contact identifiers, for example, "Lisa", "daughter", "mom", and "dad". The user may select any contact identifier, and use the selected contact as the recipient of the satellite message.

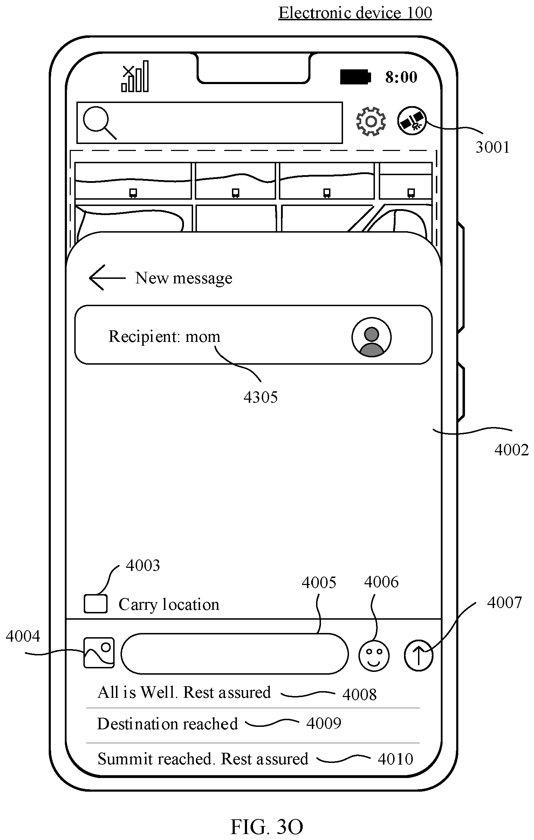

For example, as shown in FIG. 3N, the electronic device 100 may receive and respond to an input operation performed by the user on the contact identifier "mom", for example, a tap operation. In response to the input operation of the user, the electronic device 100 may display a satellite message editing page 4002 shown in FIG. 3O. The satellite message editing page 4002 shown in FIG. 3O is similar to the satellite message editing page 4002 shown in FIG. 3L. A difference lies in that the satellite message editing page 4002 shown in FIG. 3O further includes a recipient identifier 4305, where the recipient identifier 4305 may be the contact "mom".

Optionally, the electronic device 100 may alternatively display the prompt box 4301 only once. After the user confirms that the map application is allowed to access the contact application of the electronic device 100, when the map application subsequently needs to access the contact application of the electronic device 100, the electronic device 100 may no longer display the prompt box 4301.

In some embodiments, the electronic device 100 may receive the recipient that is of the satellite message and that is selected by the user from one or more emergency contacts set by the user in the map application.

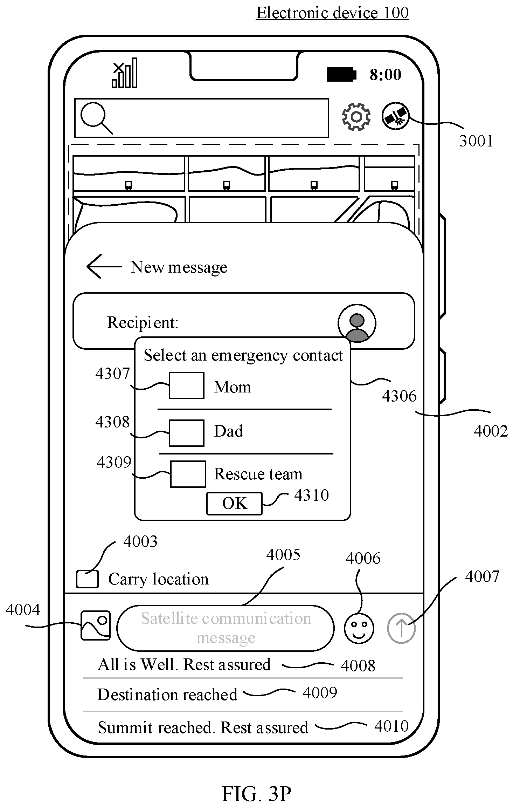

For example, refer to the description shown in FIG. 3L. The electronic device 100 receives and responds to the selection operation performed by the user on the recipient option, and the electronic device 100 may display a prompt box 4306 shown in FIG. 3P. The prompt box 4306 may display one or more emergency contact identifiers set by the user in the map application.

As shown in FIG. 3P, the prompt box 4306 displays a contact identifier 4307, a contact identifier 4308, a contact identifier 4309, and an OK option 4310. For example, the contact identifier 4307 may be "mom", the contact identifier 4308 may be "dad", and the contact identifier 4309 may be "rescue team".

A contact corresponding to the contact identifier 4307 and a contact corresponding to the contact identifier 4308 may be emergency contacts set by the user in the map application. A contact corresponding to the contact identifier 4309 may be an emergency contact preset in the map application.

Optionally, the map application may alternatively not preset the emergency contact, and the prompt box 4306 may alternatively not display the contact identifier 4309.

The user may select any one or more emergency contacts as recipients of the satellite message.

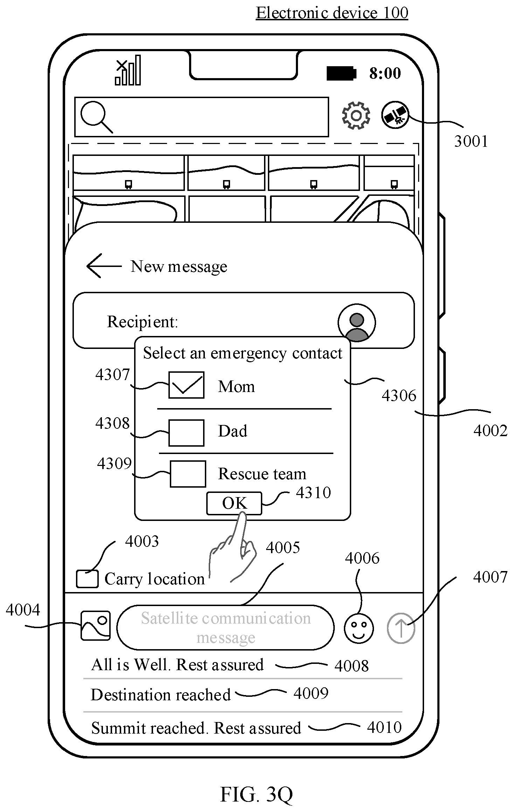

As shown in FIG. 3Q, when the contact identifier 4307 is selected, the electronic device 100 may receive an input operation performed by the user on the OK option 4310, for example, a tap operation. In response to the input operation of the user, the electronic device 100 may display a satellite message editing page 4002 similar to that shown in FIG. 3O.

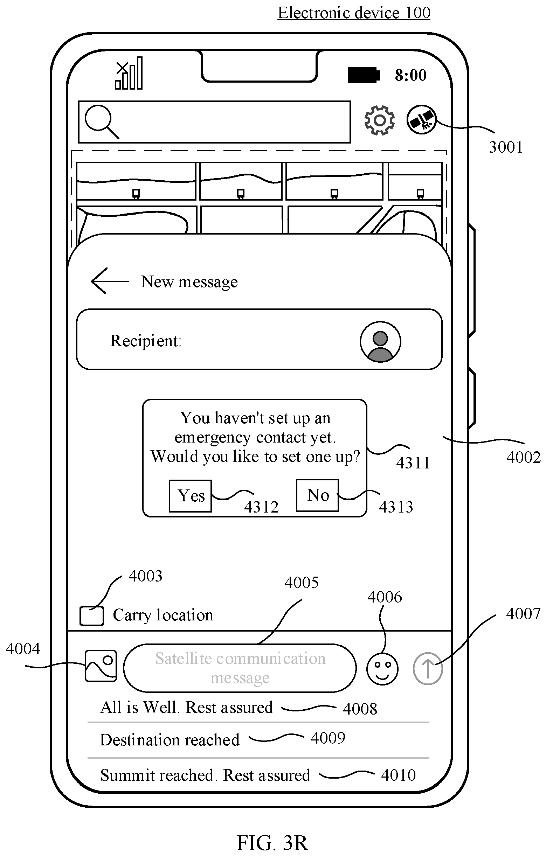

In some embodiments, after the electronic device 100 receives and responds to the selection operation performed by the user on the recipient option, if the user does not set the emergency contact in the map application, the electronic device 100 may display a prompt box 4311 shown in FIG. 3R. The prompt box 4311 includes text "You haven't set up an emergency contact yet. Would you like to set one up?". The text is used to prompt the user to set the emergency contact in the map application. The prompt box 4311 may further include a yes option 4312 and a no option 4313. The user may set the emergency contact in the map application by using the yes option 4312, or the user may not set the emergency contact in the map application by using the no option.

Not limited to the foregoing manners of selecting the recipient of the satellite message, the electronic device 100 may further select the recipient of the satellite message in another manner. For example, the user may alternatively manually enter a phone number corresponding to the recipient of the satellite message. This is not limited in this application.

In some embodiments, an emergency rescue option may be displayed on the satellite message editing page 4002. The user may select the emergency rescue option, and send a satellite message edited by the user to an emergency rescue contact corresponding to the emergency rescue option.

For example, as shown in FIG. 4A, the electronic device 100 may display an emergency rescue option 4314 on the satellite message editing page 4002. When the user is in a hazardous environment and needs rescue, the user may select the emergency rescue option 4314 when sending a satellite message, and the electronic device 100 may send the satellite message to an emergency rescue contact, so that the emergency rescue contact can receive the rescue message sent by the user and perform a rescue operation on the user.

Optionally, the emergency rescue contact may be a rescue organization preset in the map application, or may be the emergency contact set by the user in the map application, or may be a user that is near the electronic device 100 and that is of the map application, or may be a member in a social group created or joined by the user in the first application, or the like.

Optionally, when the user does not need rescue, the user may not select the emergency rescue option 4314, and the electronic device 100 may send only the satellite message to a recipient selected by the user.

After selecting the recipient of the satellite message, the user may alternatively edit the satellite message on the satellite message editing page 4002.

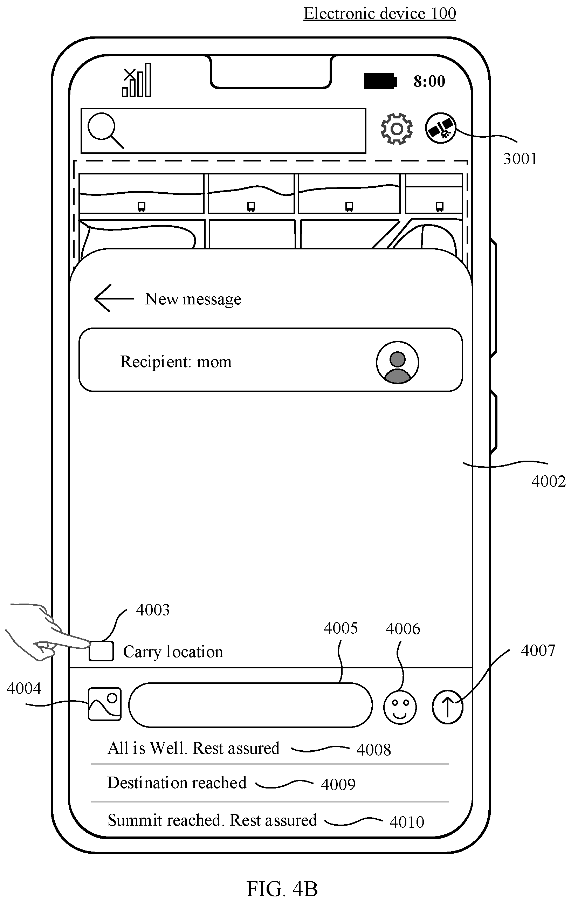

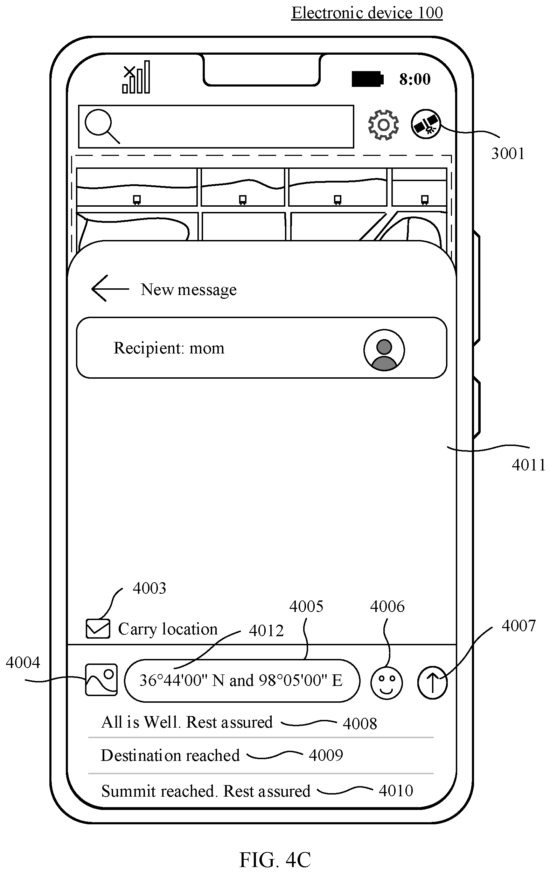

As shown in FIG. 4B, the electronic device 100 may receive an input operation performed by the user on the carry location option 4003, for example, a tap operation. In response to the input operation of the user, as shown in FIG. 4C, to-be-sent text 4012 is displayed in the message editing box 4005. The to-be-sent text 4012 may be the location information of the electronic device 100. For example, the location information of the electronic device 100 may be "36°44'00" N and 98°05'00" E".

Optionally, the to-be-sent text 4012 may alternatively be displayed outside the message editing box 4005. Information displayed in the message editing box 4005 may also be referred to as a satellite message.

Optionally, not limited to sending the location information of the electronic device 100 to another electronic device via the first satellite, the electronic device 100 may alternatively send any one or more of a picture, a video, an emoji, a user-defined message, and the like to the another electronic device via the first satellite.

In FIG. 4C, after the electronic device 100 displays the to-be-sent text 4012 in the message editing box 4005, the send option 4007 is in an operable state.

As shown in FIG. 4C, after the user confirms to send the location information of the electronic device 100 to the another electronic device, the electronic device 100 may receive an input operation performed by the user on the send option 4007, for example, a tap operation. In response to the input operation of the user, the electronic device 100 may start a MeeTime APP, and send, to the MeeTime APP, the to-be-sent satellite message displayed in the message editing box 4005, for example, the location information of the electronic device 100, so that the map application can send the location information of the electronic device 100 to the first satellite via the MeeTime APP.

Optionally, before the map application sends the location information of the electronic device 100 to the MeeTime APP, the map application may add verification information of the map application to the location information of the electronic device 100. The verification information indicates that the message is sent by the map application. The map application may send the location information of the electronic device 100 and the verification information of the map application to the MeeTime APP.

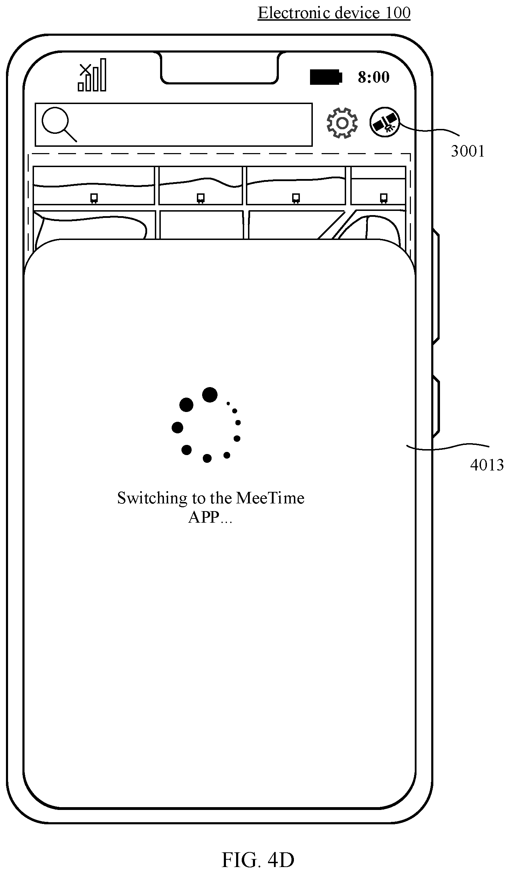

In a process of starting the MeeTime APP, the electronic device 100 may display a page 4013 shown in FIG. 4D. The page 4013 displays text "Switching to the MeeTime APP...". The text is used to inform the user that the map application sends the satellite message to the first satellite via the MeeTime APP.

Optionally, the electronic device 100 may alternatively not display the page 4013 shown in FIG. 4D.

In some embodiments, after the MeeTime APP is started, if the electronic device 100 does not establish a satellite communication connection to the first satellite, the electronic device 100 may display a satellite alignment page based on satellite alignment data obtained by the MeeTime APP, to prompt the user to operate the electronic device 100, so that the electronic device 100 establishes the satellite communication connection to the first satellite.

Optionally, after the MeeTime APP is started, a process in which the electronic device 100 establishes the satellite communication connection to the first satellite may include a process shown in FIG. 4E to FIG. 4M.

The electronic device 100 may display a calibration page 4014 shown in FIG. 4E. The calibration page 4014 may be a page displayed by the MeeTime APP based on the obtained satellite alignment data.

As shown in FIG. 4E, the calibration page 4014 may include a disable control 231, an operation prompt 232, a calibration assistance 233, and an application identifier 4211. The disable control 231 may be used to trigger the electronic device 100 to disable a satellite communication mode. The operation prompt 232 may be used to prompt the user to perform calibration. The operation prompt may be text prompt, for example, "Keep a display vertical to the ground and turn a circle to complete a calibration circle". The calibration assistance 233 may be used to assist the user in completing calibration. For example, the calibration assistance 233 may be a small ball and a circle shown in FIG. 4E. In a process in which the user rotates the electronic device 100, the small ball may move around an inner side of the circle. After the small ball moves around the inner side of the circle for one circle, the electronic device 100 completes calibration. The application identifier 4211 indicates that the calibration page 4014 is a page displayed by the MeeTime APP.

Optionally, the calibration page 4014 may alternatively not display the application identifier 4211.

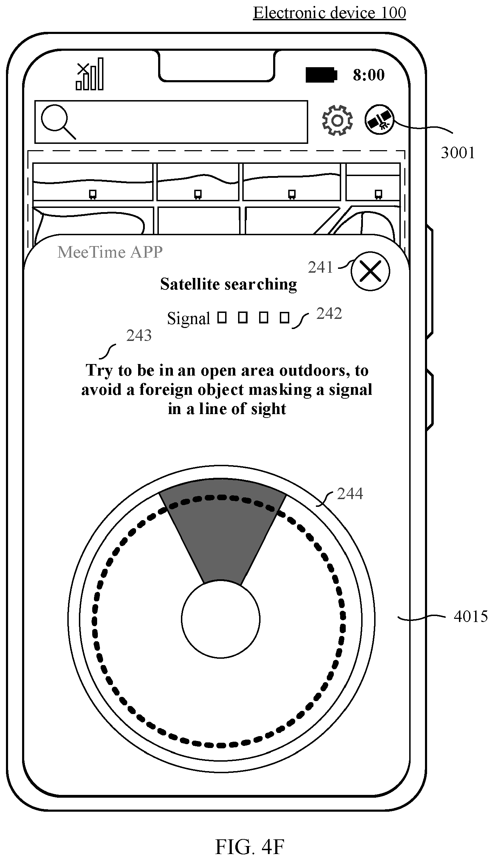

After calibration is completed, the electronic device 100 may close display of the calibration page 4014, and display a satellite alignment page 4015 shown in FIG. 4F on a home screen. In some embodiments, if the electronic device 100 determines that calibration is not required, the electronic device 100 may alternatively not display the calibration page 4014, but directly display the satellite alignment page 4015 shown in FIG. 4F.

As shown in FIG. 4F, the satellite alignment page 4015 may include a disable control 241, a strength indicator 242, and a satellite alignment operation prompt (including a text prompt 243 and an animation prompt 244). The disable control 241 may be used to trigger the electronic device 100 to disable the satellite communication mode. The strength indicator 242 indicates satellite signal strength. The satellite alignment operation prompt indicates the user to perform a satellite alignment operation. For example, the text prompt 243 may include text "Try to be in an open area outdoors, to avoid a foreign object masking a signal in a line of sight". The animation prompt 244 may indicate whether the electronic device 100 detects a satellite. The animation prompt 244 may include a sector area. The sector area may indicate a location relationship between a location of the satellite and a pointing direction of an antenna of the electronic device 100 to the user. In the embodiment shown in FIG. 4F, no symbol representing a satellite appears in the animation prompt 244, to inform the user that the electronic device 100 has not found the satellite currently.

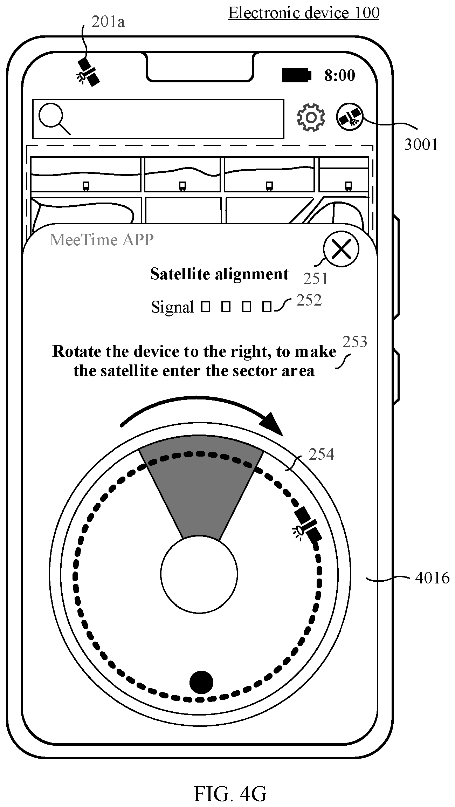

After the electronic device 100 finds the satellite, the electronic device 100 may display, based on the location of the satellite relative to the electronic device 100, an alignment page 4016 shown in FIG. 4G. The location of the satellite relative to the electronic device 100 may be represented by a pitch angle and an azimuth angle.

As shown in FIG. 4G, the alignment page 4016 may include a disable control 251, a strength indicator 252, and an alignment operation prompt (including a text prompt 253 and an animation prompt 254). For specific functions of the disable control 251 and the strength indicator 252, refer to the functions of the corresponding controls on the satellite alignment page 4015 shown in FIG. 4F. The alignment operation prompt indicates the user to perform an alignment operation. For example, the text prompt 253 may include text "Rotate the device to the right, to make the satellite enter the sector area". The animation prompt 254 may include a sector area. The sector area may indicate an azimuth angle between the location of the satellite and the antenna of the electronic device 100 to the user. In the animation prompt 254 shown in FIG. 4G, a symbol representing a satellite (briefly referred to as a satellite in the following embodiments) is located on a right side of the sector area. Therefore, the user needs to rotate the electronic device 100 to the right to enable the satellite to be located in the sector area, to ensure that the electronic device 100 establishes a good communication connection to the satellite via the antenna. In addition, the animation prompt 254 may further include a small ball. A location of the small ball may indicate a pitch angle of the electronic device 100 relative to the satellite to the user. The animation prompt 254 may further include an arrow. The arrow indicates that the user rotates the device to the right. In addition, a satellite symbol 201a may be further displayed on the home screen, to inform the user that the electronic device 100 has currently found the satellite. In some other embodiments, the satellite symbol 201a may alternatively be displayed after the electronic device 100 establishes the communication connection to the satellite, or may be displayed after the satellite communication mode is enabled.

It may be understood that the alignment page 4016 shown in FIG. 4G is merely an example. In some embodiments, if the satellite is in another orientation relative to the antenna of the electronic device 100, the alignment operation prompt on the alignment page 4016 may alternatively be correspondingly changed (for example, when the satellite is located on a left side of the sector area, the user is prompted to rotate the device to the left). This is not limited herein in this application.

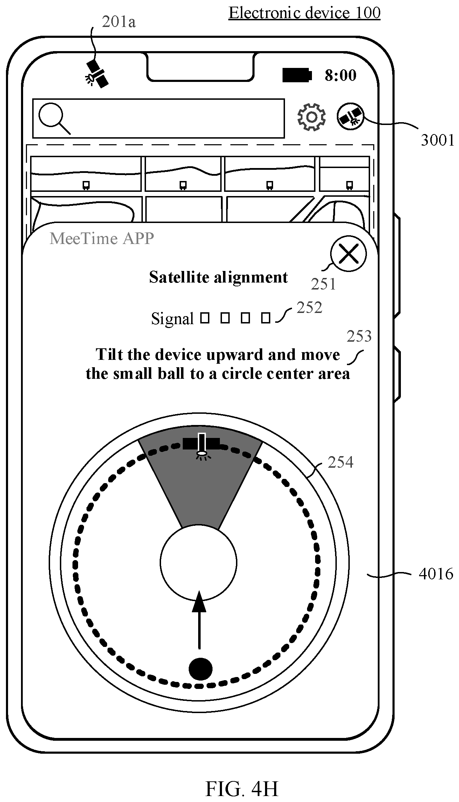

After the electronic device 100 is rotated to the right to enable the satellite to be located in the sector area, as shown in FIG. 4H, the electronic device 100 may change the alignment operation prompt.

As shown in FIG. 4H, on the alignment page 4016, the text prompt 253 may be "Tilt the device upward and move the small ball to a circle center area". In the animation prompt 254, the satellite may be located in a sector area, and a pointing arrow may be displayed near the small ball, to indicate the user to tilt the device to move the small ball upward. When the small ball moves to the circle center area, adjustment of the pitch angle of the electronic device 100 relative to the satellite is completed.

It may be understood that the alignment page 4016 shown in FIG. 4H is merely an example. In some embodiments, the pitch angle of the electronic device 100 relative to the satellite may alternatively be different from that in the foregoing embodiment. In this case, a location of the small ball in the animation prompt may also be different from that in the foregoing embodiment shown in FIG. 4H. This is not limited in this application.

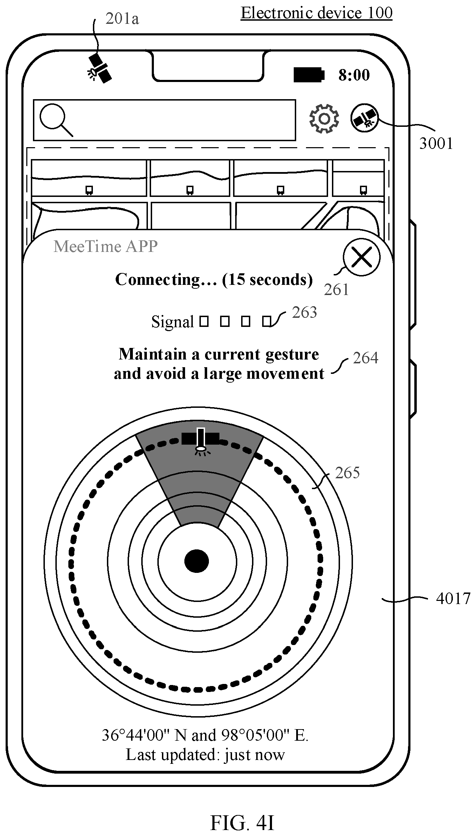

After alignment is completed, the electronic device 100 may close the alignment page 4016, and display a satellite connection page 4017 shown in FIG. 4I.

As shown in FIG. 4I, the satellite connection page 4017 may include a disable control 261, a strength indicator 263, and an operation prompt (including a text prompt 264 and an animation prompt 265). Optionally, the satellite connection page 4017 may further display current latitude and longitude information of the electronic device 100, for example, 36°44'00" N and 98°05'00" E, and may further display update time of the latitude and longitude, for example, last updated: just now. For function descriptions of the disable control 261 and the strength indicator 263, refer to the function descriptions of the related controls in the foregoing embodiment. Details are not described herein again. The operation prompt may indicate an operation performed by the user in a satellite connection process. For example, the text prompt 264 may be text "Maintain a current gesture and avoid a large movement". The animation prompt 265 may inform the user whether a posture of holding the device is correct. For example, the satellite is located in the sector area, and the small ball is located in the circle center area. In this case, the posture of the user holding the device is correct. In other cases, the user needs to adjust the posture of holding the device. A plurality of concentric circles may be further displayed in the animation prompt 265, to indicate that the electronic device 100 is establishing a communication connection to the satellite. In addition, the satellite connection page 4017 may further display a title "Connecting", to inform the user that the electronic device 100 is currently establishing a communication connection to the satellite. Optionally, a countdown may be further displayed next to the title, for example, "15 seconds".

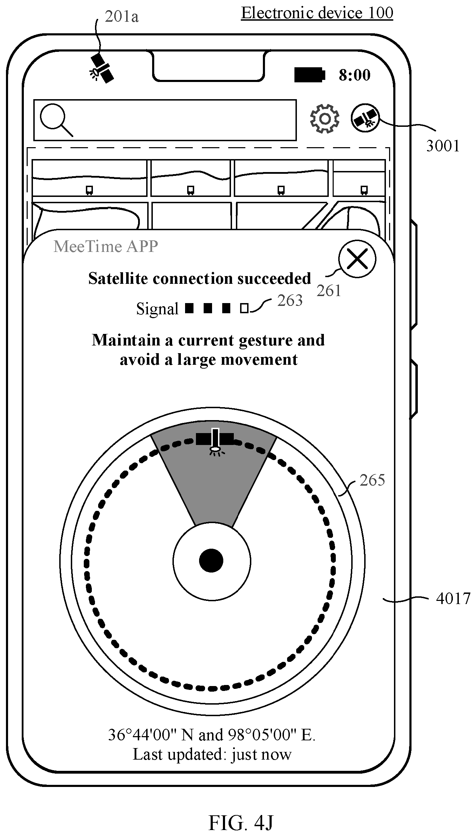

After the electronic device 100 successfully establishes the connection to the satellite, as shown in FIG. 4J, the electronic device 100 may change strength of a signal in the strength indicator 263, and display a connection success prompt.

The strength of the signal in the strength indicator 263 shown in FIG. 4J is three bars, while the strength of the signal in the strength indicator 263 shown in FIG. 4I is zero bars. The connection success prompt may be changed from the title "Connecting" shown in FIG. 4J to "Satellite connection succeeded". After successfully establishing the connection to the satellite, the electronic device 100 may close the plurality of concentric circles displayed in the animation prompt 265, to inform the user that the communication connection has been established.

In some embodiments, after the MeeTime APP is started, if the electronic device 100 has established the satellite communication connection to the first satellite, the electronic device 100 may alternatively not display the satellite alignment pages shown in FIG. 4E to FIG. 4J.

In some embodiments, after the electronic device 100 establishes the satellite communication connection between the electronic device 100 and the first satellite, and the map application sends the location information of the electronic device 100 to the MeeTime APP, and before the MeeTime APP sends the location information of the electronic device 100 to the first satellite, the MeeTime APP may display an information sending page 4021 shown in FIG. 4K. The information sending page 4021 includes a satellite real-time capsule 4022 and prompt information 4023.

The satellite real-time capsule 4022 may include a strength indicator, to indicate strength of a current satellite signal to the user. For example, it may be seen from the satellite real-time capsule 4022 shown in FIG. 4K that the strength of the current signal strength is three bars. Optionally, the satellite real-time capsule 4022 may further include an operation gesture "Please maintain a current gesture posture" of the user and current latitude and longitude information of the electronic device 100, for example, "36°44'00" N and 98°05'00" E", and may further display update time of the latitude and longitude, for example, "Last updated: just now".

The prompt information 4023 may include text "Are you sure you want to send the following content to Mom? Location information: 36°44'00" N and 98°05'00" E". The prompt information 4023 is used to prompt the user to confirm content of a satellite message that is to be sent by the electronic device 100 to the contact "mom". The prompt information 4023 may further include a yes option 4024 and a no option 4025. The user may confirm, by using the yes option 4024, that the to-be-sent text 4012 entered by the user in the message editing box 4005 is sent to the contact "mom". The user may alternatively stop sending the to-be-sent text 4012 to the contact "mom" by using the no option 4025.

For example, as shown in FIG. 4K, the electronic device 100 may receive an input operation performed by the user on the yes option 4024 in the prompt information 4023, for example, a tap operation. In response to the input operation of the user, the electronic device 100 may send, to the first satellite via the MeeTime APP, the location information of the electronic device 100 that is sent by the map application.

Optionally, the electronic device 100 may alternatively not display the prompt information 4023 shown in FIG. 4K.

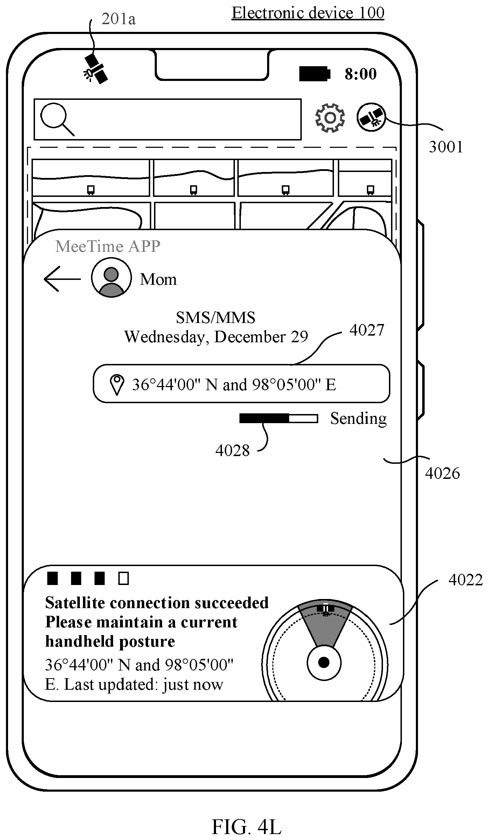

After the electronic device 100 sends the location information of the electronic device 100 to the first satellite via the MeeTime APP, the electronic device 100 may display a message sending page 4026 shown in FIG. 4L, and display the satellite real-time capsule 4022 on the message sending page 4026.

As shown in FIG. 4L, the message sending page 4026 may include recipient information, a message 4027, and a message sending status prompt 4028. The message 4027 may include the location information of the electronic device 100. The sending status prompt 4028 may indicate a sending status of the information to the user. The sending status includes: being sent, successfully sent, failed to be sent, waiting to be sent, and the like. The sending status of the message 4027 shown in FIG. 4L is being sent, and a sending progress bar is displayed.

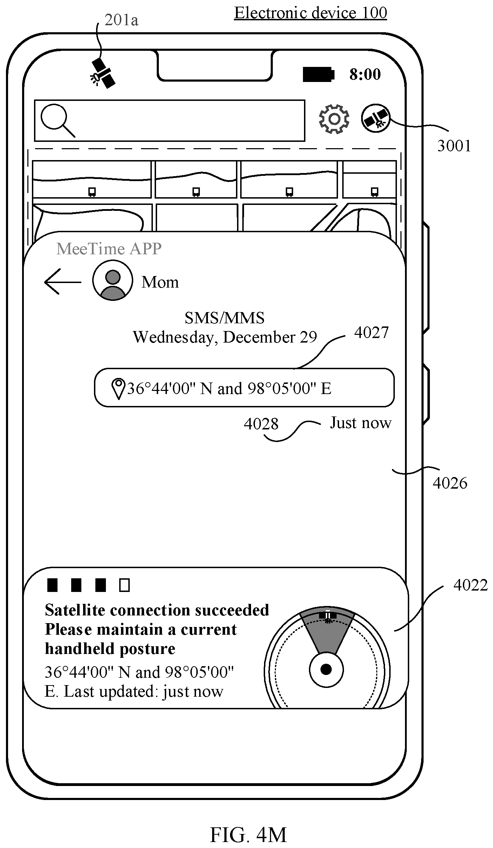

After the message 4027 is successfully sent, in other words, after an electronic device 200 or an application server 800 receives the message 4027, as shown in FIG. 4M, the electronic device 100 may change the sending status prompt 4028 on the message sending page 4026 to "just now", to inform the user that the message 4027 is just successfully sent.

Optionally, after the MeeTime APP sends the location information of the electronic device 100 to the electronic device 200, the electronic device 100 may display, in the MeeTime APP, a prompt indicating that the satellite message is successfully sent.

Optionally, after the MeeTime APP sends the location information of the electronic device 100 to the electronic device 200, the electronic device 100 may alternatively display, in the map application, the prompt indicating that the satellite message is successfully sent.

In some embodiments, after the map application sends the location information of the electronic device 100 to the electronic device 200 via the MeeTime APP, the electronic device 100 may receive an operation performed by the user in the MeeTime APP, and view, in the MeeTime APP, a list of satellite messages sent by the MeeTime APP in a recent period of time or a list of satellite messages sent by the map application in a recent period of time via the MeeTime APP.

In some embodiments, after the map application sends the location information of the electronic device 100 to the electronic device 200 via the MeeTime APP, the electronic device 100 may receive an operation performed by the user in the map application, and the map application may switch to the MeeTime APP, and view, in the MeeTime APP, the list of the satellite messages sent by the map application in the recent period of time via the MeeTime APP.

In some embodiments, after the map application sends the location information of the electronic device 100 to the electronic device 200 via the MeeTime APP, the electronic device 100 may receive an operation performed by the user in the map application, and view, in the map application, the list of the satellite messages sent by the map application in the recent period of time via the MeeTime APP.

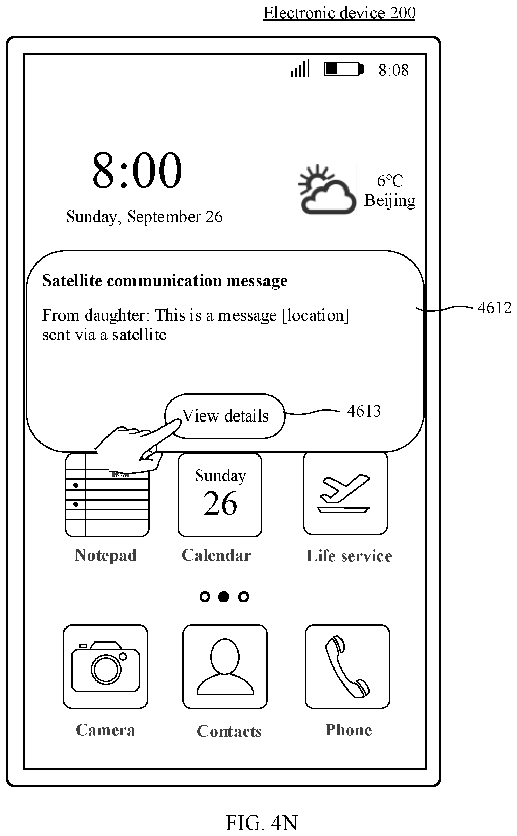

In some embodiments, an application server 500 may send the message 4027 to an SMS APP on the electronic device 200. For example, the electronic device 100 may send the message 4027 to the first satellite via the MeeTime APP, the first satellite sends the message 4027 to the application server 500, the application server 500 sends the message 4027 to a base station, and the base station sends the message 4027 to the SMS APP on the electronic device 200. After the SMS APP on the electronic device 200 receives the message 4027, the electronic device 200 may display prompt information 4612 shown in FIG. 4N. The prompt information 4612 is used to inform the user that the message 4027 sent by the electronic device 100 via the satellite device is received. The prompt information 4612 includes a view details option 4613. The user may view, by using the view details option 4613, content of the message 4027 sent by the electronic device 100.

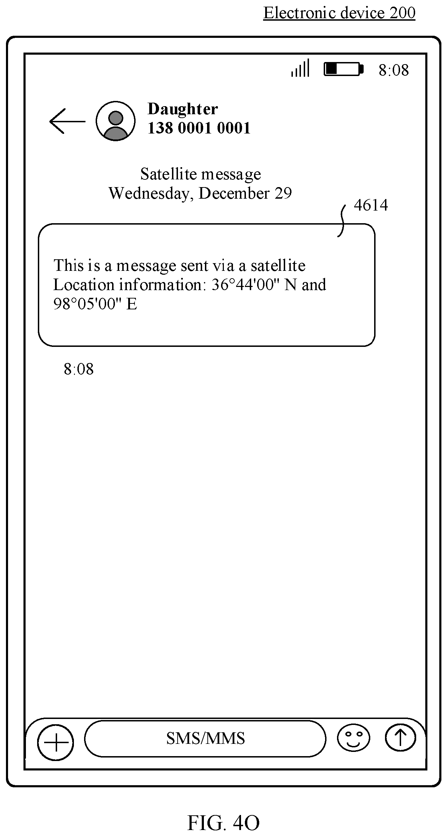

For example, as shown in FIG. 4N, the electronic device 200 may receive an input operation performed by the user on the view details option 4613 in the prompt information 4612, for example, a tap operation. In response to the input operation of the user, the electronic device 200 may display a user interface shown in FIG. 4O. The user interface shown in FIG. 4O shows content 4614 of the message 4027 sent by the electronic device 100. For example, the content 4614 of the message 4027 may include the location information of the electronic device 100: "36°44'00" N and 98°05'00" E".

In some embodiments, the application server 500 may obtain a web page link of the message 4027, and send the web page link to the SMS APP on the electronic device 200. For example, the electronic device 100 may send the message 4027 to the first satellite via the MeeTime APP, the first satellite sends the message 4027 to the application server 500, the application server 500 may obtain the web page link of the message 4027 and the application server 500 sends the web page link of the message 4027 to the base station, and the base station sends the message 4027 to the SMS APP on the electronic device 200.

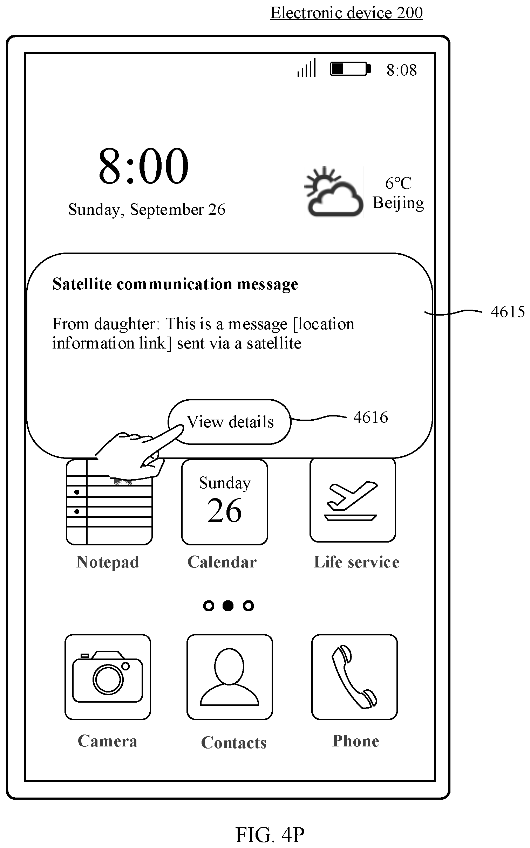

After the SMS APP on the electronic device 200 receives the web page link of the message 4027, the electronic device 200 may display prompt information 4615 shown in FIG. 4P. The prompt information 4615 is used to inform the user that the electronic device 200 receives the web page link that is of the message 4027 and that is sent by the electronic device 100 via the satellite device. The prompt information 4615 includes a view details option 4616. The user may view, by using the view details option 4616, the content of the message 4027 sent by the electronic device 100.

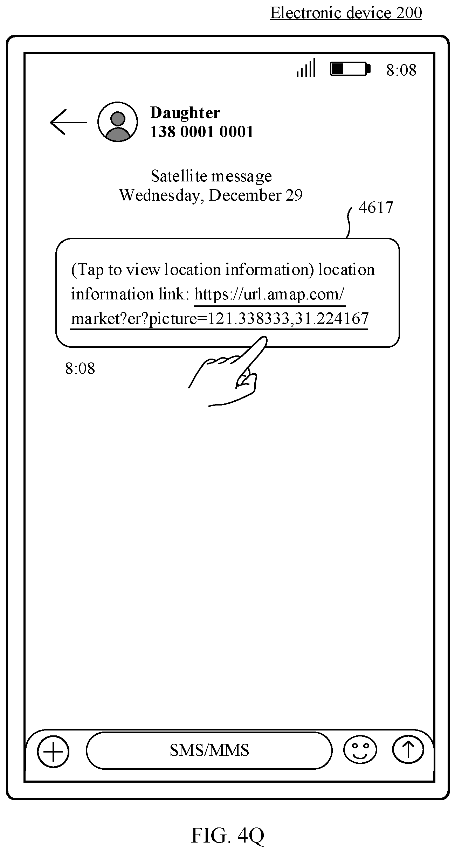

For example, as shown in FIG. 4P, the electronic device 200 may receive and respond to an operation of tapping the view details option 4616 by the user, and the electronic device 200 may display a user interface shown in FIG. 4Q. The user interface shown in FIG. 4Q shows a website link 4617 corresponding to the message 4027 sent by the electronic device 100.

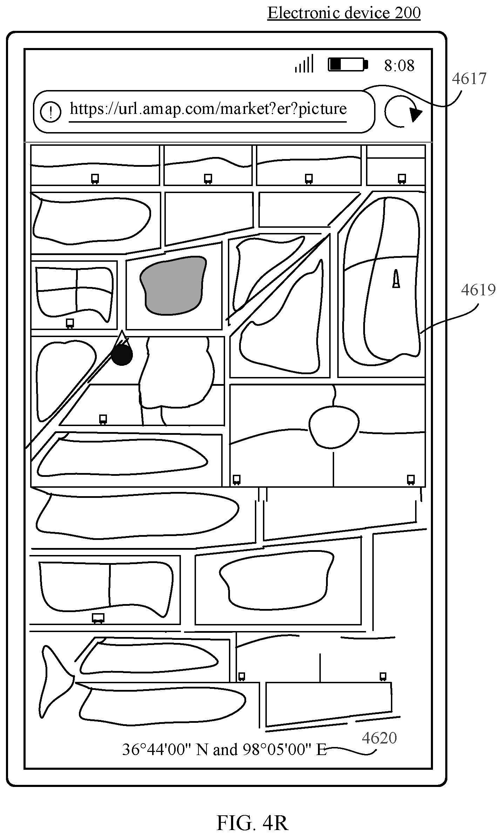

For example, as shown in FIG. 4Q, the electronic device 200 may receive an input operation performed by the user on the website link 4617, for example, a tap operation. In response to the input operation of the user, the electronic device 200 may display a web page corresponding to the website link 4617 shown in FIG. 4R. The web page corresponding to the website link 4617 shows the website link 4617, map information 4619, and location information 4620. The location information 4620 may be the message 4027 sent by the electronic device 100.

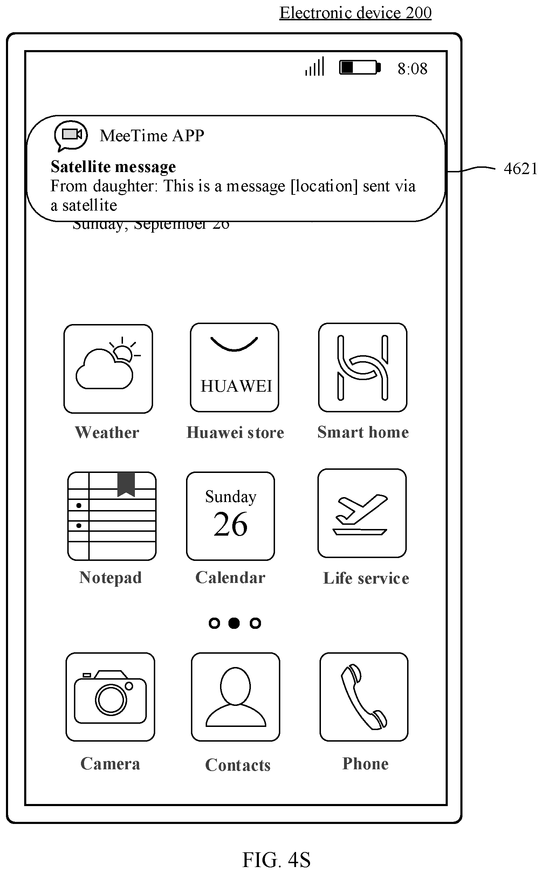

In some embodiments, the application server 500 may send the message 4027 to the MeeTime APP on the electronic device 200. For example, the electronic device 100 may send the message 4027 to the first satellite via the MeeTime APP, the first satellite sends the message 4027 to the application server 500, and the application server 500 sends the message 4027 to the MeeTime APP on the electronic device 200. After the MeeTime APP on the electronic device 200 receives the message 4027, the electronic device 200 may display prompt information 4621 shown in FIG. 4S. The prompt information 4621 is used to inform the user that the message 4027 sent by the electronic device 100 via the satellite device is received.

The electronic device 100 may receive an input operation performed by the user on the prompt information 4621, for example, a tap operation. In response to the input operation of the user, the electronic device 200 may display a user interface similar to that shown in FIG. 4O, and the user may view the location information of the electronic device 100.

In some embodiments, the application server 500 may send the message 4027 to the application server 800 of the map application. The application server 800 may publish the message 4027 to the map application, and the user may view, via the map application, a rescue request message published by the user of the electronic device 100.

For example, the electronic device 100 may send the message 4027 to the first satellite via the MeeTime APP, the first satellite sends the message 4027 to the application server 500, and the application server 500 sends the message 4027 to the application server 800 of the map application. The application server 800 of the map application may then send the message 4027 to the map application, and the electronic device 200 on which the map application is installed may receive the message 4027 sent by the application server 800 and display a notification message indicating that the message 4027 is received.

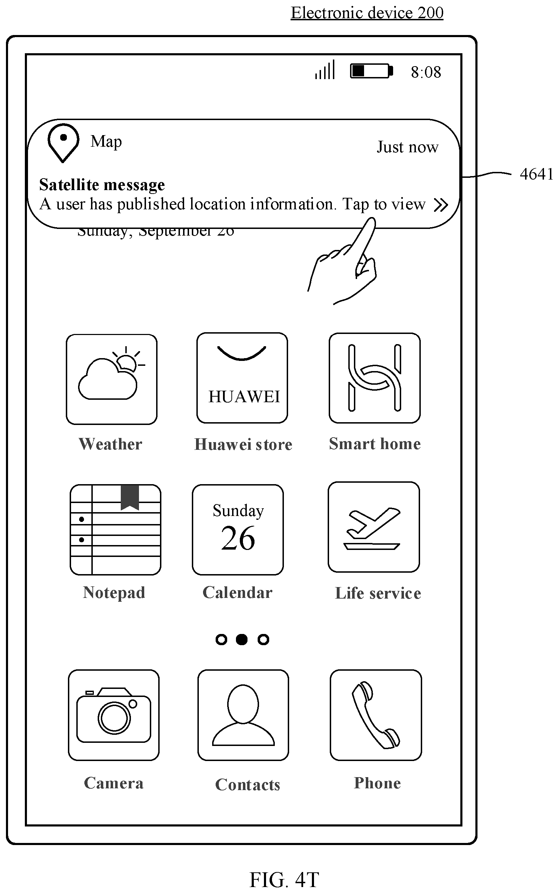

After the map application on the electronic device 200 receives the message 4027, the electronic device 200 may display prompt information 4641 shown in FIG. 4T. The prompt information 4641 is used to inform the user that the electronic device 200 receives the message 4027 sent by the electronic device 100 via the satellite device. The user may tap the prompt information 4641 to view the content of the message 4027.

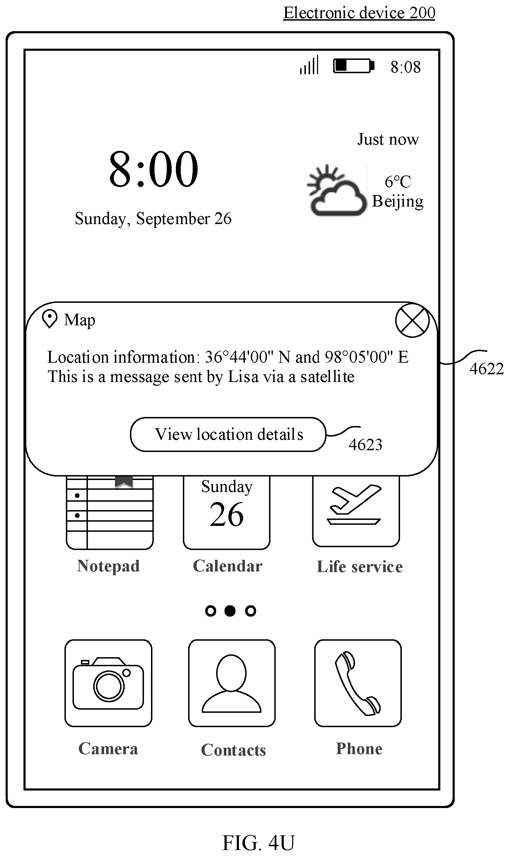

For example, as shown in FIG. 4T, the electronic device 200 may receive an input operation performed by the user on the prompt information 4641, for example, a tap operation. In response to the input operation of the user, the electronic device 200 may display the content of the message 4027. For example, the electronic device 200 may display a prompt box 4622 shown in FIG. 4U. The prompt box 4622 displays the content of the message 4027, sender information of the message 4027, and the like. The prompt box 4622 may further include a view location details option 4623. The user may enable, by using the view location details option 4623, the map application to display a detailed location of the electronic device 100, a navigation route that uses a location of the electronic device 200 as a start point and uses the location of the electronic device 100 as an end point, duration required by the navigation route, and the like.

Optionally, not limited to pushing the message 4027 to the map application, the application server 800 may alternatively display the message 4027 on a web page of the map application, publish the message 4027 to an official account of the map application, or the like. A manner in which the application server 800 publishes the message 4027 is not limited in this application.

The satellite message editing page shown in the embodiments in FIG. 4B and FIG. 4C is provided by the map application, and satellite message editing interfaces provided by different applications may be different or may be the same.

In some embodiments, the satellite message editing page may alternatively be provided by the MeeTime APP.

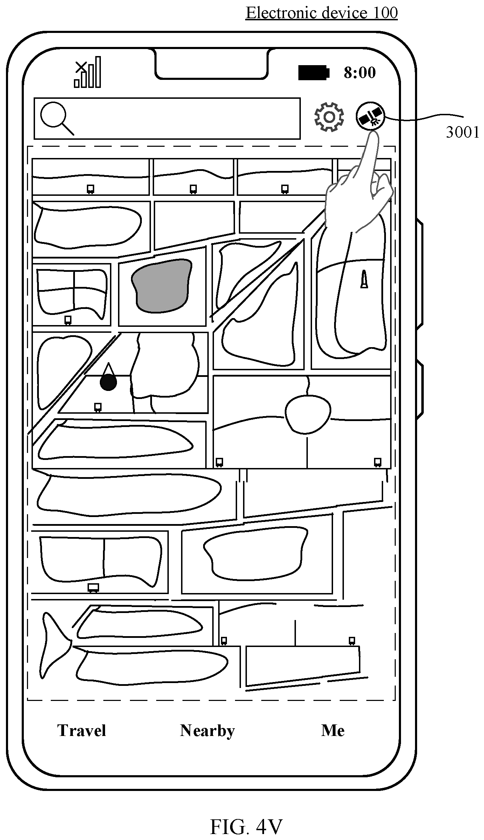

For example, as shown in FIG. 4V, the electronic device 100 may receive an input operation performed by the user on the satellite network entry 3001, for example, a tap operation. In response to the input operation of the user, the electronic device 100 may start the MeeTime APP.

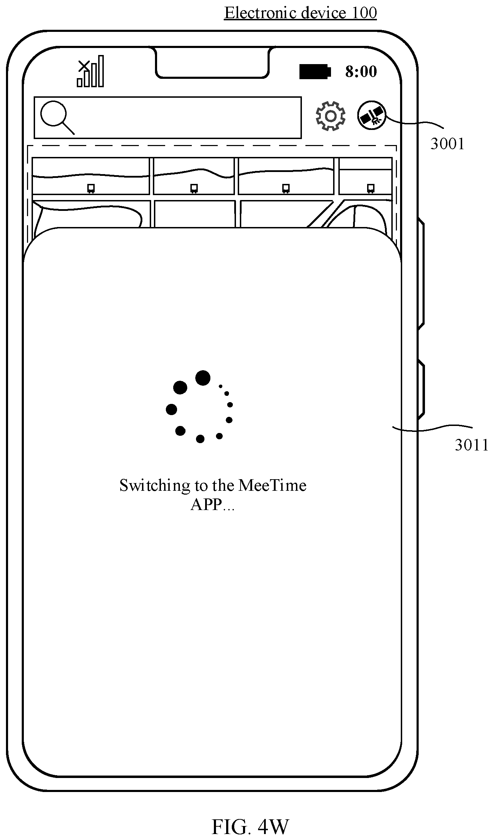

In a process of starting the MeeTime APP, the electronic device 100 may display a page 3011 shown in FIG. 4W. The page 3011 displays text "Switching to the MeeTime APP...". The text is used to inform the user that the map application edits and sends a satellite message via the MeeTime APP.

Optionally, the electronic device 100 may alternatively not display the page 3011 shown in FIG. 4W.

In some embodiments, after the MeeTime APP is started, the electronic device 100 may display a satellite message editing page 4210 shown in FIG. 4X.

The satellite message editing page 4210 includes an application identifier 4211, a carry location option 4212, a picture selection option 4213, a message editing box 4214, an emoji selection option 4215, a send option 4216, and a plurality of user-defined message options. For example, the plurality of user-defined message options may include a user-defined message option 4217, a user-defined message option 4218, and a user-defined message option 4219.

Optionally, in the process of starting the MeeTime APP, the map application may alternatively send user-defined messages to the MeeTime APP, so that the MeeTime APP may display the user-defined message option 4217, the user-defined message option 4218, and the user-defined message option 4219 based on the user-defined messages sent by the map application.

The application identifier 4211 is used to inform the user that the satellite message editing page 4210 is displayed by the MeeTime APP.

For descriptions of the carry location option 4212, the picture selection option 4213, the message editing box 4214, the emoji selection option 4215, the send option 4216, and the plurality of user-defined message options, refer to the descriptions of the plurality of options in the embodiment in FIG. 4B. Details are not described herein again in this application.

Optionally, different applications may provide different user-defined messages.

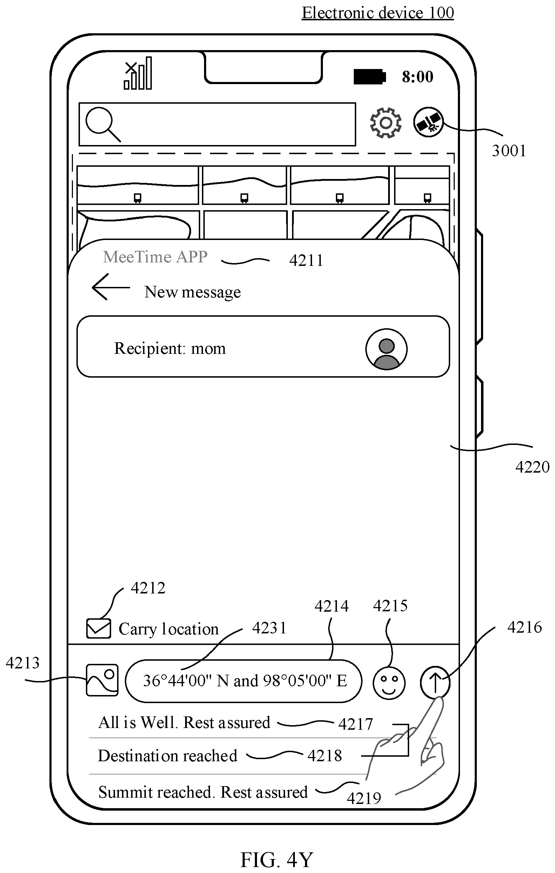

As shown in FIG. 4X, the electronic device 100 may receive and respond to a selection operation performed by the user on the carry location option 4212, and display a satellite message editing page 4220 shown in FIG. 4Y.

The satellite message editing page 4220 is similar to the satellite message editing page 4210, and a difference lies in that to-be-sent text 4231 is displayed in the message editing box 4214 of the satellite message editing page 4220. The to-be-sent text 4231 may be the location information of the electronic device 100. For example, the location information of the electronic device 100 may be "36°44'00" N and 98°05'00" E".

As shown in FIG. 4Y, after the user confirms to send the location information of the electronic device 100 to the another electronic device, the electronic device 100 may receive an input operation performed by the user on the send option 4216, for example, a tap operation. In response to the input operation of the user, the electronic device 100 may send the location information of the electronic device 100 to the first satellite via the MeeTime APP.

Optionally, after the electronic device 100 may receive the input operation performed by the user on the send option 4216, and before the MeeTime APP sends the location information of the electronic device 100 to the first satellite, the MeeTime APP may send, to the second application, a message for obtaining the verification information of the map application, and receive the verification information that is of the map application and that is sent by the second application.

Optionally, after the electronic device 100 receives an input operation performed by the user on the satellite network entry 3001, the map application may actively send the verification information of the map application to the MeeTime APP.

In some embodiments, if the verification information of the map application is obtained based on the to-be-sent satellite message, for example, the location information of the electronic device 100, after the electronic device 100 may receive the input operation performed by the user on the send option 4216 and before the MeeTime APP sends the location information of the electronic device 100 to the first satellite, the MeeTime APP may send the location information of the electronic device 100 to the map application. The map application may generate the verification information of the map application based on the location information of the electronic device 100, and send the verification information of the map application to the MeeTime APP.

In some embodiments, after the electronic device 100 may receive the input operation performed by the user on the send option 4216, if the electronic device 100 does not establish the communication connection to the first satellite, the electronic device 100 may display a satellite alignment page based on the satellite alignment data obtained by the MeeTime APP, to prompt the user to operate the electronic device 100, so that the electronic device 100 establishes the satellite communication connection to the first satellite. For details, refer to the descriptions in the embodiments of FIG. 4E to FIG. 4J. After the electronic device 100 establishes the satellite communication connection to the first satellite, the electronic device 100 may display the prompt information 4023 shown in FIG. 4K, to prompt the user to confirm whether to send the location information of the electronic device 100 via the MeeTime APP. For details, refer to the descriptions in the embodiments of FIG. 4K to FIG. 4T.

In some embodiments, after the electronic device 100 may receive the input operation performed by the user on the send option 4216, if the electronic device 100 has established the communication connection to the first satellite, the electronic device 100 may display the prompt information 4023 shown in FIG. 4K, to prompt the user to confirm whether to send the location information of the electronic device 100 via the MeeTime APP. For details, refer to the descriptions in the embodiments of FIG. 4K to FIG. 4T.

Optionally, in the foregoing embodiment, when there is no cellular network, the second application invokes the satellite communication capability of the first communication application to send the satellite message. In another embodiment, alternatively, when there is a cellular network, the second application may invoke the satellite communication capability of the first communication application to send the satellite message.

**FIG. 5A to FIG. 5C** **are a schematic flowchart of a method for invoking a satellite communication capability of a first communication application by a second application to send a satellite message.**

The method includes some or all of steps S501 to S515. The following describes in detail possible implementations of the method. The method is applied to a communication system including an electronic device 100, a satellite device, an application server 500, an application server 800, and an electronic device 200. The satellite device may include a satellite 300 and a satellite ground station 400, and a communication connection is established between the satellite 300 and the satellite ground station 400. The electronic device 100 includes but is not limited to a second application and a first communication application.

Optionally, FIG. 5A to FIG. 5C may be a method procedure of displaying a satellite message editing page by the second application.

S501: The electronic device 100 receives a user operation to start the second application, and displays a first identifier in the second application if it is queried that the electronic device 100 has a satellite communication capability and the second application has permission to use the satellite communication capability of the electronic device 100.

The electronic device 100 may receive the user operation to start the second application. In response to the operation of starting the second application, the electronic device 100 may query whether the electronic device 100 has the satellite communication capability and whether the second application has permission to use the satellite communication capability of the electronic device 100.

That the electronic device 100 has the satellite communication capability may mean that the first communication application is installed on the electronic device 100, and the first communication application has been connected to a first satellite. The electronic device 100 may send a satellite message to the first satellite via the first communication application, or the electronic device 100 may receive, via the first communication application, a satellite message sent by the first satellite.

That the second application has permission to use the satellite communication capability of the electronic device 100 may mean that the second application needs to be associated with the first communication application. An application associated with the first communication application may invoke the capability of communicating with the first satellite of the first communication application. In other words, the application associated with the first communication application may send a satellite message to the first satellite via the first communication application, or receive, via the first communication application, a satellite message sent by the first satellite.

When the second application is started, the electronic device 100 may query whether the electronic device 100 has the satellite communication capability and whether the second application has permission to use the satellite communication capability of the electronic device 100.

When the electronic device 100 has the satellite communication capability and the second application has permission to use the satellite communication capability of the electronic device 100, the electronic device 100 may display the first identifier in the second application. The first identifier indicates that the second application may use the capability of communicating with the first satellite of the electronic device 100.

For example, the second application may be a settings application, and the first identifier may be a satellite network entry 3001 shown in FIG. 3B.

For example, the second application may be a MeeTime APP, and the first identifier may be a satellite network entry 3001 shown in FIG. 3D.

For example, the second application may be a map application, and the first identifier may be a satellite network entry 3001 shown in FIG. 3F.

When the electronic device 100 does not have the satellite communication capability and/or the second application does not have permission to use the satellite communication capability of the electronic device 100, the electronic device 100 may not display the first identifier in the second application.

S502: The second application receives an input operation performed by a user on the first identifier, and displays the satellite message editing page.

This application is described by using an example in which the second application is a map application and the first communication application is a MeeTime APP.

The second application may receive the input operation performed by the user on the first identifier, for example, a tap operation, and display the satellite message editing page. The user may edit a to-be-sent satellite message on the satellite message editing page.

For example, the satellite message editing page may be a satellite message editing page 4002 shown in FIG. 4B.

Optionally, satellite message editing pages provided by different applications may be the same or different.

S503: The second application receives an operation of entering a first message on the satellite message editing page and sending the first message.

After displaying the satellite message editing page, the second application may receive the first message entered on the satellite message editing page by the user, where the first message is a message to be sent to the first satellite.

In some embodiments, the satellite message editing page may include a carry location option. For example, the carry location option may be a carry location option 4003 on the satellite message editing page 4002 shown in FIG. 4B. The user may select the carry location option, so that the electronic device 100 quickly enters location information of the electronic device 100 on the satellite message editing page, and the user does not need to manually enter the location information of the electronic device 100. This reduces a user operation.

In some embodiments, the satellite message editing page may include user-defined message options. For example, the user-defined message options may be a user-defined message option 4008, a user-defined message option 4009, and a user-defined message option 4010 on the satellite message editing page 4002 shown in FIG. 4B. The user may select the user-defined message option, so that the electronic device 100 quickly enters the first message on the satellite message editing page, and the user does not need to manually enter the first message. This reduces a user operation.

For example, the first message may be to-be-sent text 4012 shown in FIG. 4C.

After confirming to send the first message to the first satellite, the electronic device 100 may receive an operation of sending the first message by the user. For example, the operation of sending the first message may be an input operation, for example, a tap operation, for a send option 4007 shown in FIG. 4C.

S504: In response to the operation of sending the first message, the second application sends the first message, a recipient number, and a second application identifier to the first communication application.

The recipient number is used to confirm a recipient of the first message. For how the electronic device 100 confirms the recipient number of the first message, refer to the descriptions in FIG. 3L to FIG. 3R.

The second application identifier is used to confirm that the first message is sent to the application server 800 of the second application.

S505: The first communication application displays first prompt information, where the first prompt information is used to prompt the user whether to send the first message via the first communication application.

After receiving the first message sent by the second application, the first communication application may display the first prompt information, where the first prompt information is used to prompt the user whether to send the first message via the first communication application.

Because the second application invokes a satellite communication capability of the first communication application to send the first message to the first satellite, before the first communication application sends the first message to the first satellite, the first communication application may prompt the user to confirm whether to send the first message. The user may select to continue sending the first message to the first satellite via the first communication application, or the user may select to stop sending the first message, to avoid accidental touch.

For example, the first prompt information may be prompt information 4023 shown in FIG. 4K.

In some embodiments, before or after the first communication application displays the first prompt information, if the electronic device 100 does not establish a satellite communication connection to the first satellite, the electronic device 100 may display a satellite alignment page based on satellite alignment data obtained by the MeeTime APP, to prompt the user to operate the electronic device 100, so that the electronic device 100 establishes the satellite communication connection to the first satellite. For details, refer to the descriptions in the embodiments of FIG. 4E to FIG. 4J. In this application, an occasion at which the electronic device 100 prompts the user to operate the electronic device 100, so that the electronic device 100 establishes the satellite communication connection to the first satellite is not limited, and may be before the first communication application displays the first prompt information, or may be after the first communication application displays the first prompt information, or may be on another occasion.

S506: In response to an operation of confirming to send the first message via the first communication application, the first communication application sends the first message, the recipient number, and the second application identifier to the satellite device.

S507: The satellite device sends the first message, the recipient number, and the second application identifier to the application server 500.

After the first communication application displays the first prompt information, and after the user confirms to send the first message via the first communication application, for example, by performing an input operation on a yes option 4024 in the prompt information 4023 shown in FIG. 4K, the first communication application may sequentially send the first message, the recipient number, and the second application identifier to the satellite device via a satellite communication module, a satellite interface layer (satellite-RIL), and a satellite modem.

Then, the satellite device sends the first message, the recipient number, and the second application identifier to the application server 500.

Optionally, the satellite device may include the satellite 300 and the satellite ground station 400. The satellite device may send the first message, the recipient number, and the second application identifier to the satellite ground station 400, and then the satellite ground station 400 sends the first message, the recipient number, and the second application identifier to the application server 500.

Optionally, the first application may send verification message of the second application to the first communication application, and then the first communication application sends the verification message of the second application to the application server 500. The verification message of the second application is used by the application server 500 to verify that the first message is sent by the second message, and then the application server 500 sends the first message to a second application on the electronic device 200 or a public platform of the second application. This can improve security.

Optionally, the electronic device 1004 may not perform S505. In S504, after the second application sends the first message, the recipient number, and the second application identifier to the first communication application, the second application may directly send the first message, the recipient number, and the second application identifier to the satellite communication module without displaying the first prompt information.

For example, the first message may be a message 4027 shown in FIG. 4M.

After receiving the first message, the recipient number, and the second application identifier, the application server 500 may perform S508 to S511, and/or S512 and S513, and/or S514 and S515.

S508: The application server 500 sends the recipient number and the first message to the application server 800 based on the second application identifier.

S509: The application server 800 sends the first message to the second application on the electronic device 200 based on the recipient number.

S510: The electronic device 200 displays the first message via the second application.

S511: The application server 800 publishes the first message on the public platform of the second application.

The application server 800 may be a server of the second application, and the application server 500 may be connected to the application server 800. After the application server 500 receives the first message and the second application identifier, the application server 500 may send the first message to the application server 800 based on the second application identifier.

After the application server 800 receives the recipient number and the first message, on one hand, if it is confirmed that the second application is installed on the electronic device 200, a user of the electronic device 200 is a registered user of the second application, and a registered account is logged in to the second application on the electronic device 200, the application server 800 may send the first message to the second application on the electronic device 200 based on the recipient number, and the electronic device 200 may display the first message via the second application. For example, the electronic device 200 may display prompt information 4641 shown in FIG. 4T.

On the other hand, after the application server 800 receives the recipient number and the first message, the application server 800 may publish the first message on the public platform of the second application, for example, a website or an official account of the second application.

Optionally, in addition to pushing the first message to the second application, or displaying the first message on the website of the second application, the application server 800 may further display and push the first message in another manner. This is not limited in this application.

Optionally, the application server 800 may alternatively receive the verification message of the second application. After verifying validity of the first message based on the verification message of the second application, the application server 800 pushes the first message to the second application on the electronic device 200, or displays the first message on the public platform of the second application, or the like. This can ensure information security.

That the application server 500 verifies validity of the first message based on the verification message of the second application may mean that the application server 800 confirms, based on the verification message of the second application, that the first message is a message sent by the second application.

S512: The application server 500 sends the first message to a MeeTime APP on the electronic device 200 based on the recipient number.

S513: The electronic device 200 displays the first message via the MeeTime APP.

Optionally, a receiving device corresponding to the recipient number may be the electronic device 200.

After obtaining the recipient number and the first message, the application server 500 may send the first message to the MeeTime APP on the electronic device 200 based on the recipient number. The electronic device 200 may display, via the MeeTime APP, a prompt message indicating that the first message is received.

For example, the electronic device 200 may display prompt information 4621 shown in FIG. 4S. The electronic device 200 may alternatively receive an input operation performed by the user on the prompt information 4621, and view content of the first message.

Optionally, after receiving the recipient number and the first message, the application server 500 may confirm whether the recipient number is a registered user of the first communication application and/or whether the electronic device 200 has logged in to a MeeTime APP account. If it is confirmed that the recipient number is the registered user of the first communication application and/or the electronic device 200 has logged in to the MeeTime APP account, the receiving device (for example, the electronic device 200) corresponding to the recipient number may receive the first message sent by the application server 500, and the application server 500 may send the first message to the MeeTime APP on the electronic device 200 based on the recipient number. If it is confirmed that the recipient number is not the registered user of the first communication application and/or the electronic device 200 has not logged in to the MeeTime APP account, the receiving device (for example, the electronic device 200) corresponding to the recipient number cannot receive the first message sent by the application server 500, and S515 to S515 may be performed.

S514: The application server 500 sends the first message to an SMS APP on the electronic device 200 based on the recipient number.

S515: The electronic device 200 displays the first message via the SMS APP.

Optionally, the application server 500 may first send the recipient number and the first message to a network device 600, where the recipient number is used by the network device 600 to confirm a receiving device of the first message. For example, the receiving device of the first message is the electronic device 200, and the network device 600 may send the first message to the SMS APP on the electronic device 200 based on a recipient number.

In some embodiments, after the electronic device 200 receives the first message via the SMS APP, the electronic device 200 may display prompt information 4612 shown in FIG. 4N. The electronic device 200 may alternatively receive an input operation performed by the user on the prompt information 4612, and view the content of the first message. For example, the electronic device 200 may display content 4614 shown in FIG. 4O.

In some embodiments, after the electronic device 200 receives the first message via the SMS APP, the electronic device 200 may alternatively display prompt information 4615 shown in FIG. 4P. The electronic device 200 may alternatively receive an input operation performed by the user on the prompt information 4615, and view the content of the first message. For example, the electronic device 200 may display a website link 4617 shown in FIG. 4Q. The user may tap the website link 4617, and the electronic device 200 may display a web page corresponding to a website link 4617 shown in FIG. 4R.

Optionally, if the application server 500 confirms that the recipient number is not a registered user of the MeeTime APP and/or the electronic device 200 has not logged in to the MeeTime APP account, the application server 500 sends the recipient number and the first message to the network device 600.

According to the method provided in the embodiment of FIG. 5A to FIG. 5C, when the second application has the capability of communicating with the first satellite and the second application has permission to use the capability of communicating with the first satellite of the electronic device 100, the user may perform an operation in the second application to send a satellite message, and display a satellite message editing interface via the second application. In the method, different second applications can customize satellite message editing interfaces. After confirming a to-be-sent satellite message, the second application may alternatively send the message to the first satellite via the first communication application, and the second application may also send the satellite message without connecting to the first satellite. This reduces development workload of the second application.

Optionally, after the electronic device 100 sends the first information to the electronic device 200, the electronic device 100 may display, in the first communication application, a prompt indicating that the first information is successfully sent.

Optionally, after the electronic device 100 sends the first information to the electronic device 200, the electronic device 100 may alternatively display, in the second application, a prompt indicating that the first information is successfully sent.

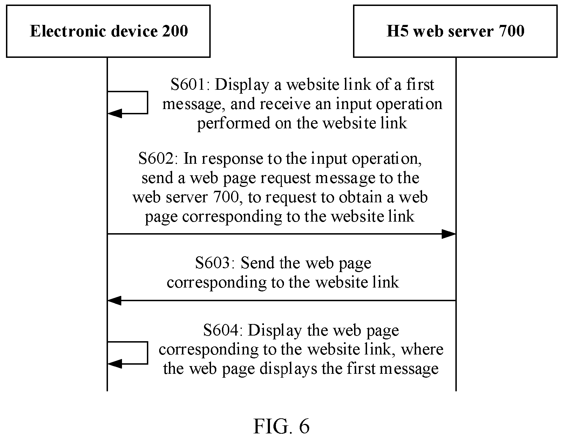

In some embodiments, in S515, before the electronic device 200 displays the first message via the SMS APP, the electronic device 200 may further perform method steps shown in FIG. 6.

S601: The electronic device 200 displays a website link of the first message, and receives an input operation performed on the website link.

For example, the website link of the first message may be the website link 4617 shown in FIG. 4Q.

S602: In response to the input operation, the electronic device 200 sends a web page request message to an H5 web server 700, to request to obtain a web page corresponding to the website link.

S603: The H5 web server 700 sends the web page corresponding to the website link to the electronic device 200.

For example, the web page corresponding to the website link may be a web page corresponding to the website link 4617 shown in FIG. 4R.

S604: The electronic device 200 displays the web page corresponding to the website link, where the web page displays the first message.

In some embodiments, before step S515, the application server 500 stores the first message and generates the website link of the first message. After step S510, the electronic device 200 may request the application server 500 to obtain the web page corresponding to the website link, to view the first message on the web page.

For example, the first message may be location information 4620 shown in FIG. 4R.

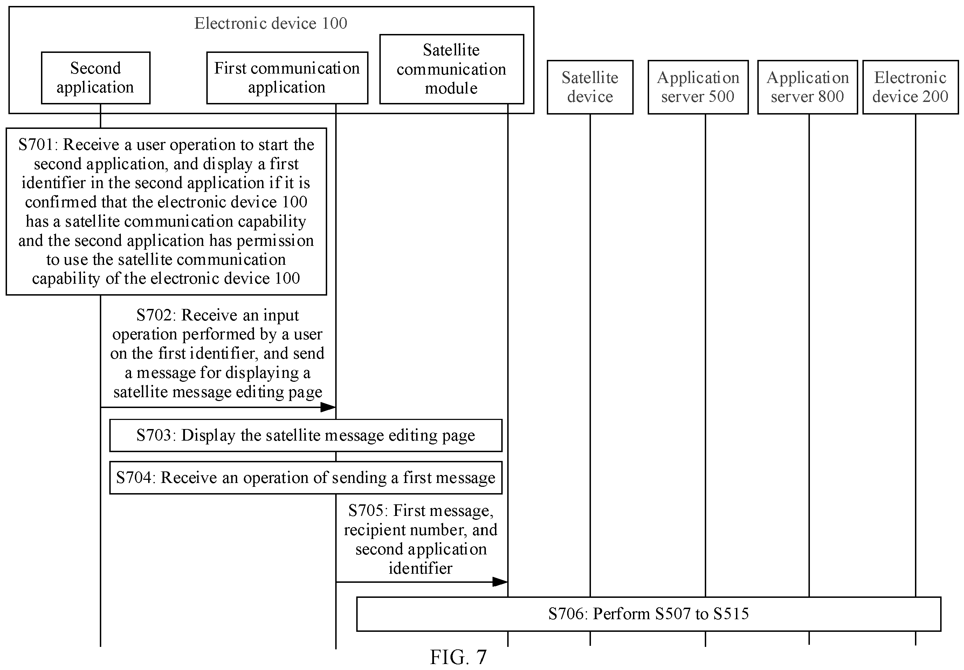

**FIG. 7** **is a schematic flowchart of another method for invoking a satellite communication capability of a first communication application by a second application to send a satellite message.**

The method includes some or all of steps S701 to S706. The following describes in detail possible implementations of the method. The method is applied to a communication system including an electronic device 100, a satellite device, an application server 500, an application server 800, and an electronic device 200. The satellite device may include a satellite 300 and a satellite ground station 400, and a communication connection is established between the satellite 300 and the satellite ground station 400. The electronic device 100 includes but is not limited to a second application, the first communication application, and a satellite communication module.

Optionally, FIG. 7 may be a method procedure of displaying a satellite message editing page by the first communication application.

S701: Receive a user operation to start the second application, and display a first identifier in the second application if it is confirmed that the electronic device 100 has a satellite communication capability and the second application has permission to use the satellite communication capability of the electronic device 100.

For descriptions of S701, refer to the descriptions in S501. Details are not described herein again in this application.

S702: The second application receives an input operation performed by a user on the first identifier, and sends, to the first communication application, a message for displaying the satellite message editing page.

This application is described by using an example in which the second application is a map application and the first communication application is a MeeTime APP.

The second application may receive the input operation, for example, a tap operation, performed by the user on the first identifier, and the second application may send, to the first communication application, the message for displaying the satellite message editing page.

The message for displaying the satellite message editing page indicates the first communication application to display the satellite message editing page, so that the user may edit a to-be-sent satellite message on the satellite message editing page.

S703: The first communication application displays the satellite message editing page.

In response to the message that is sent by the second application and that is for displaying the satellite message editing page, the first communication application may display the satellite message editing page.

For example, the satellite message editing page may be a satellite message editing page 4210 shown in FIG. 4X.

Optionally, the second application may alternatively send a user-defined message to the first communication application. The first communication application may display the user-defined message of the second application on the satellite message editing page. The user may quickly select the user-defined message of the second application as a first message to be sent to a first satellite, and the user does not need to manually enter the first message to be sent to the first satellite. The method can reduce a user operation.

Optionally, different second applications may provide different user-defined messages.

For example, the user-defined message provided by the second application may be a user-defined message corresponding to a user-defined message option 4217, a user-defined message corresponding to a user-defined message option 4218, and a user-defined message corresponding to a user-defined message option 4219 shown in FIG. 4X.

According to the method, the second application may display the satellite message editing page via the first communication application, and a module for displaying the satellite message editing page does not need to be integrated into the second application. This can reduce development workload of the second application.

S704: The first communication application receives an operation of sending the first message.

After displaying the satellite message editing page, the first communication application may receive the first message that is to be sent to the first satellite and that is entered by the user on the satellite message editing page, and after confirming the to-be-sent first message, the first communication application may receive the operation of sending the first message by the user.

For example, the first message may be location information of an electronic device 100 shown in FIG. 4W, and the operation of sending the first message may be an input operation, for example, a tap operation, for a send option 4216 shown in FIG. 4X.

S705: The first communication application sends the first message, a recipient number, and a second application identifier to the satellite communication module.

After obtaining the first message, the first communication application may send the first message and the recipient number to the satellite communication module.

S706: Perform S507 to S515.

For descriptions of S706, refer to the detailed descriptions of S507 to S515 in the embodiment in FIG. 5A to FIG. 5C. Details are not described herein again in this application.

Optionally, the second application may alternatively send a verification message of the second application to the first communication application, where the verification message of the second application indicates that the message is sent by the second application. For example, the verification message of the second application is used by the application server 800 of the second application to confirm that the first message is sent by the second application. Then, the first communication application sends the verification message of the second application to the satellite communication module.

In some embodiments, the second application may alternatively not actively send the verification message of the second application to the first communication application. In S704, after the first communication application receives the operation of sending the first message, the first communication application may send, to the second application, a message for obtaining the verification message of the second application. After receiving the message that is sent by the first communication application and that is for obtaining the verification message of the second application, the second application sends the verification message of the second application to the first communication application.

According to the method provided in the embodiment of FIG. 7, when the second application has a capability of communicating with the first satellite and the second application has permission to use a capability of communicating with the first satellite of the electronic device 100, the user may perform an operation in the second application to send a satellite message, and display a satellite message editing interface via the first communication application. The module for displaying the satellite message editing page does not need to be integrated into the second application. This reduces development workload of the second application. After confirming a to-be-sent satellite message, the second application may alternatively send the message to the first satellite via the first communication application, and the second application may also send the satellite message without connecting to the first satellite. This further reduces development workload of the second application.

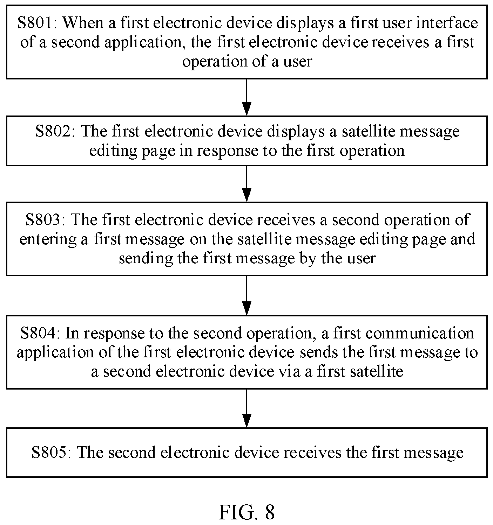

FIG. 8 is a method schematic flowchart of a satellite communication method according to this application.

S801: When a first electronic device displays a first user interface of a second application, the first electronic device receives a first operation of a user.

S802: The first electronic device displays a satellite message editing page in response to the first operation.

S803: The first electronic device receives a second operation of entering a first message on the satellite message editing page and sending the first message by the user.

S804: In response to the second operation, a first communication application of the first electronic device sends the first message to a second electronic device via a first satellite.

S805: The second electronic device receives the first message.

For example, the second application may be a map application, the first communication application may be a MeeTime APP, the first electronic device may be the electronic device 100, and the second electronic device may be the electronic device 200.

In some embodiments, after the map application sends the location information of the electronic device 100 to the electronic device 200 via the MeeTime APP, the electronic device 100 may receive an operation performed by the user in the MeeTime APP, and view, in the MeeTime APP, a list of satellite messages sent by the MeeTime APP in a recent period of time or a list of satellite messages sent by the map application in a recent period of time via the MeeTime APP.

In some embodiments, after the map application sends the location information of the electronic device 100 to the electronic device 200 via the MeeTime APP, the electronic device 100 may receive an operation performed by the user in the map application, and the map application may switch to the MeeTime APP, and view, in the MeeTime APP, the list of the satellite messages sent by the map application in the recent period of time via the MeeTime APP.

In some embodiments, after the map application sends the location information of the electronic device 100 to the electronic device 200 via the MeeTime APP, the electronic device 100 may receive an operation performed by the user in the map application, and view, in the map application, the list of the satellite messages sent by the map application in the recent period of time via the MeeTime APP.

According to the method, the second application on the first electronic device may invoke a satellite communication function of the first communication application that is on the first electronic device and that has been connected to the first satellite. In this way, the second application can send a satellite message to the first satellite without connecting to the satellite. This reduces development workload of the second application.

For example, the second application may be a system application or a third-party application. The system application may include but is not limited to a home screen application, a settings application, a control center, and the like.

When the second application is the home screen application, that the first electronic device displays the first user interface of the second application may mean that the first electronic device displays a home screen. When the second application is the settings application, that the first electronic device displays the first user interface of the second application may mean that the first electronic device displays a setting interface. When the second application is the control center, that the first electronic device displays the first user interface of the second application may mean that the first electronic device displays a control center interface, for example, a control center interface shown in FIG. 3I.

When the second application is the third-party application, that the first electronic device displays the first user interface of the second application may mean that the first electronic device displays a user interface in the third-party application, for example, a main interface of a MeeTime APP shown in FIG. 3D or a main interface of a map application shown in FIG. 3F.

In another embodiment, that the first electronic device displays the first user interface of the second application may alternatively mean that when the second application is in an active state, the second application may run in the foreground or may run in the background. When the second application runs in the foreground, the first electronic device displays a user interface in the second application; or when the second application runs in the background, the first electronic device does not display a user interface in the second application.

In a possible implementation, that the first electronic device displays the satellite message editing page in response to the first operation specifically includes: The first electronic device displays a second user interface in response to the first operation, where partial content of the first user interface is displayed in a first partial area of the second user interface, and the satellite message editing page is displayed in a second partial area of the second user interface.

For example, the satellite message editing page may be a satellite message editing page 4002 shown in FIG. 3K, the first user interface may be a main interface of a map application shown in FIG. 3J, and the second user interface may be a user interface shown in FIG. 3K. The first partial area of the second user interface may be a display area in which some map content shown in FIG. 3K is located, and the second partial area of the second user interface may be a display area in which the satellite message editing page 4002 shown in FIG. 3K is located.

In a possible implementation, the first user operation is an operation for a physical button on the first electronic device.

According to the method, the user may quickly invoke, via the second application and the physical button on the first electronic device, the satellite communication function of the first communication application to send the satellite message.

For example, the first application may be a system application, and the physical button may be a side button, for example, a power button or a volume button.

In another embodiment, the first application may alternatively be a third-party application.

In a possible implementation, a first identifier is displayed in the first user interface, the first identifier indicates that the second application has permission to use a satellite communication capability of the first electronic device, and the first user operation is an operation for the first identifier.

According to the method, when the first electronic device has the satellite communication capability and the second application also has the satellite communication capability of using the first electronic device, the first electronic device may display the first identifier in the second application. The first identifier is used to inform the user that the second application may send the satellite message, and the user may trigger, based on the first identifier, the second application to send the satellite message.

For example, the first identifier may be a satellite network entry 3001 shown in FIG. 3B to FIG. 3I.

In a possible implementation, the second application is the third-party application or the system application.

For example, the third-party application may be a map application or an instant messaging application. The system application may be a home screen application, a settings application, a control center, or the like.

In a possible implementation, the satellite message editing page is a page of the second application, and the first communication application obtains the first message via the second application.

According to the method, different second applications may provide different satellite message editing pages.

Optionally, a user-defined message is displayed on the satellite message editing page provided by the second application, and the user may select the user-defined message to quickly edit a to-be-sent satellite message. This reduces a user operation.

After the first electronic device receives an edited satellite message (the first message) sent by the user, the second application may send the first message to the first communication application, and the second application may send the first message to the first satellite by using the satellite communication capability of the first communication application.

For example, the satellite message editing page provided by the second application may be the satellite message editing page 4002 shown in FIG. 3K. User-defined messages displayed on the satellite message editing page provided by the second application may be user-defined messages corresponding to a plurality of user-defined message options shown in FIG. 3K.

In a possible implementation, the satellite message editing page is a page of the first communication application, and the first message is obtained by the first communication application.

According to the method, the second application does not need to have a capability of displaying the satellite message editing page. This can reduce development workload of the second application.

Optionally, a user-defined message is displayed on the satellite message editing page provided by the first communication application, and the user may select the user-defined message to quickly edit a to-be-sent satellite message. This reduces a user operation. The user-defined message may be from the second application to the first communication application.

After the first electronic device receives an edited satellite message (the first message) sent by the user, the first communication application may send the first message to the first satellite by using the satellite communication capability of the first communication application.

For example, the satellite message editing page provided by the first communication application may be a satellite message editing page 4210 shown in FIG. 4X. User-defined messages displayed on the satellite message editing page provided by the first communication application may be user-defined messages corresponding to a plurality of user-defined message options shown in FIG. 4X.

In a possible implementation, before the first electronic device sends the first message to the first satellite via the first communication application, the method further includes: When the first electronic device does not establish a satellite communication connection to the first satellite, the first electronic device obtains satellite alignment data via the first communication application, and displays a satellite alignment guidance page, where the satellite alignment page includes operation prompt information, and the operation prompt information is used to prompt the user to change a posture of the first electronic device, for the first electronic device to establish the satellite communication connection to the first satellite.

For example, the satellite alignment guidance page may be pages shown in FIG. 4E to FIG. 4J.

In some embodiments, after the first electronic device obtains the satellite alignment data via the first communication application, the first communication application may also send the satellite alignment data to the second application, and the second application may display the satellite alignment guidance page based on the satellite alignment data.

In a possible implementation, before the first electronic device sends the first message to the first satellite via the first communication application, the method further includes: The first electronic device displays first prompt information, where the first prompt information is used to prompt the user whether to send the first message to the first satellite via the first communication application. That the first electronic device sends the first message to the first satellite via the first communication application specifically includes: The first electronic device receives and responds to a third operation of the user for the first prompt information, and the first electronic device sends the first message to the first satellite via the first communication application.

According to the method, the first electronic device may prompt the user whether to send the first message via the first communication application, to avoid accidental touch.

Optionally, the first prompt information may be displayed after the first electronic device receives the first operation, or may be displayed after the first electronic device receives the second operation.

For example, the first prompt information may be prompt information 4023 shown in FIG. 4K. The third operation may be an input operation, for example, a tap operation, for a yes option 4024 in the prompt information 4023 shown in FIG. 4K.

In a possible implementation, after the first electronic device receives the second operation of entering the first message on the satellite message editing page and sending the first message by the user, the method further includes:

The first electronic device displays, in the first communication application, second prompt information indicating that the first message is already sent successfully.

Optionally, the first communication application may alternatively send, to the second application, a message indicating that the first message is already sent successfully, and the first electronic device may alternatively display, in the second application, the prompt information indicating that the first message is already sent successfully.

In a possible implementation, that the first communication application of the first electronic device sends the first message to the second electronic device via the first satellite specifically includes: The first communication application of the first electronic device sends the first message to the second electronic device based on recipient information of the first message via the first satellite, where the recipient information of the first message is obtained by the first electronic device from contact information of the second application, or obtained from contact information of the first communication application, or obtained from a contact application.

For example, the contact information may be emergency contact information set by the user in an application, or may be rescue agency contact information preset in an application, or may be information about a member in a social group created or joined by the user in an application.

For example, the contact information of the second application may be emergency contact information set by the user in the second application, or may be rescue agency contact information preset in the second application, or may be information about a member in a social group created or joined by the user in the second application.

For example, for how the first electronic device confirms the recipient information, refer to descriptions in embodiments in FIG. 3L to FIG. 3R and FIG. 4A.

In a possible implementation, the first electronic device further includes a first modem, and the first modem is configured to connect to the first satellite. That the first communication application of the first electronic device sends, in response to the second operation, the first message to the second electronic device via the first satellite specifically includes: In response to the second operation, the first communication application of the first electronic device sends the first message to the first modem; the first modem of the first electronic device sends the first message to the first satellite; and the first satellite sends the first message to the second electronic device.

For example, for how the first communication application sends the first message to the first satellite, refer to descriptions in an embodiment in FIG. 2B.

In a possible implementation, the satellite communication system further includes a first server and a second server, the first server is a server of the first communication application, and the second server is a server of the second application. After the first electronic device receives the second operation of entering the first message on the satellite message editing page and sending the first message by the user, the method further includes: The first communication application of the first electronic device sends a verification message of the second application and the first message to the first server via the first satellite, where the first communication application obtains the verification message of the second application via the second application; the first server sends the first message and the verification message of the second application to the second server; and when confirming that the verification message of the second application meets a preset condition, the second server pushes the first message to a public platform of the second application or the second application.

According to the method, the second server may verify validity of the first message based on the verification message of the second application. For example, the second server confirms that the first message is sent by the second application, and then pushes the first message to the public platform of the second application or the second application. This can improve security.

For example, the public platform of the second application may include but is not limited to a website and/or an official account of the second application.

Optionally, if the verification message of the second application is obtained based on the first message, after receiving the first message, the application server may obtain verification signature information of the first message based on the first message. If signature information of the first message and the verification signature information of the first message meet a preset condition, for example, the signature information of the first message is the same as the verification signature information of the first message, it may be confirmed that the first message is a message sent by the second application, in other words, the first message is a valid message.

Optionally, if the verification message of the second application is not obtained based on the first message, for example, a preset verification message, after receiving the first message, the application server may obtain preset verification signature information of the first message. If signature information of the first message and the verification signature information of the first message meet a preset condition, for example, the signature information of the first message is the same as the verification signature information of the first message, it may be confirmed that the first message is a message sent by the second application, in other words, the first message is a valid message.

In a possible implementation, the satellite communication system further includes a first server, and the first server is a server of the first communication application. The second electronic device receives the first message specifically includes: The second electronic device receives the first message sent by the first server, where the first server obtains the first message via the first satellite; and/or the satellite communication system further includes a second server, where the second server is a server of the second application. That the second electronic device receives the first message specifically includes: The second application of the second electronic device receives the first message via the second server.

According to the method, when the first communication application is connected to the first satellite, the first server corresponding to the first communication application may be connected to the first satellite, and the first server may receive the first message sent by the first satellite, and send the first message to the second server or the second electronic device.

In a possible implementation, the second electronic device receives the first message via the first communication application or an SMS application.

In a possible implementation, when the second electronic device is logged in to an account of the first communication application, the second electronic device receives the first message via the first communication application.

For how the second electronic device receives the first message, refer to descriptions in S508 to S515 in an embodiment in FIG. 5A to FIG. 5C.

This application provides an electronic device that is a first electronic device. The first electronic device includes one or more processors and one or more memories. The one or more memories are coupled to the one or more processors. The one or more memories are configured to store computer program code, and the computer program code includes computer instructions. When the one or more processors execute the computer instructions, the first electronic device is enabled to perform the satellite communication method shown in FIG. 8.

This application provides a computer-readable storage medium, including instructions. When the instructions are run on a first electronic device, the first electronic device is enabled to perform the satellite communication method shown in FIG. 8.

This application provides a computer program product. The computer program product may include computer instructions. When the computer instructions are run on a first electronic device, the first electronic device is enabled to perform the satellite communication method shown in FIG. 8.

This application provides a chip. The chip is used in a first electronic device, and the chip includes one or more processors. The processor is configured to invoke computer instructions to enable the first electronic device to perform the satellite communication method shown in FIG. 8.

The implementations of this application may be randomly combined to achieve different technical effect.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

A person of ordinary skill in the art may understand that all or some of the procedures of the methods in the foregoing embodiments may be implemented by a computer program instructing relevant hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made based on the disclosure of the present invention shall be included in the protection scope of the present invention.

## Claims

1. A satellite communication method, wherein the method is applied to a satellite communication system, the satellite communication system comprises a first electronic device and a second electronic device, and the first electronic device comprises a first communication application and a second application; and the method comprises:
when the first electronic device displays a first user interface of the second application, receiving, by the first electronic device, a first operation of a user;
displaying, by the first electronic device, a satellite message editing page in response to the first operation;
receiving, by the first electronic device, a second operation of entering the first message on the satellite message editing page and sending the first message by the user;
in response to the second operation, sending, by the first communication application of the first electronic device, the first message to the second electronic device via a first satellite; and
receiving, by the second electronic device, the first message.

2. The method according to claim 1, wherein displaying, by the first electronic device, the satellite message editing page in response to the first operation specifically comprises:
displaying, by the first electronic device, a second user interface in response to the first operation, wherein partial content of the first user interface is displayed in a first partial area of the second user interface, and the satellite message editing page is displayed in a second partial area of the second user interface.

3. The method according to claim 1 or 2, wherein the first user operation is an operation for a physical button on the first electronic device.

4. The method according to claim 1 or 2, wherein a first identifier is displayed in the first user interface, the first identifier indicates that the second application has permission to use a satellite communication capability of the first electronic device, and the first user operation is an operation for the first identifier.

5. The method according to any one of claims 1 to 4, wherein the second application is a third-party application or a system application.

6. The method according to any one of claims 1 to 5, wherein the satellite message editing page is a page of the second application, and the first communication application obtains the first message via the second application.

7. The method according to any one of claims 1 to 5, wherein the satellite message editing page is a page of the first communication application, and the first message is obtained by the first communication application.

8. The method according to any one of claims 1 to 7, wherein before sending, by the first electronic device, the first message to the first satellite via the first communication application, the method further comprises:
when the first electronic device does not establish a satellite communication connection to the first satellite, obtaining, by the first electronic device, satellite alignment data via the first communication application, and displaying a satellite alignment guidance page, wherein the satellite alignment page comprises operation prompt information, and the operation prompt information is used to prompt the user to change a posture of the first electronic device, for the first electronic device to establish the satellite communication connection to the first satellite.

9. The method according to any one of claims 1 to 8, wherein before sending, by the first electronic device, the first message to the first satellite via the first communication application, the method further comprises:
displaying, by the first electronic device, first prompt information, wherein the first prompt information is used to prompt the user whether to send the first message to the first satellite via the first communication application; and
sending, by the first electronic device, the first message to the first satellite via the first communication application specifically comprises:
receiving and responding to, by the first electronic device, a third operation of the user for the first prompt information, and sending, by the first electronic device, the first message to the first satellite via the first communication application.

10. The method according to any one of claims 1 to 9, wherein after receiving, by the first electronic device, the second operation of entering the first message on the satellite message editing page and sending the first message by the user, the method further comprises:
displaying, by the first electronic device in the first communication application, second prompt information indicating that the first message is already sent successfully.

11. The method according to any one of claims 1 to 10, wherein sending, by the first communication application of the first electronic device, the first message to the second electronic device via the first satellite specifically comprises:
sending, by the first communication application of the first electronic device, the first message to the second electronic device based on recipient information of the first message via the first satellite, wherein the recipient information of the first message is obtained by the first electronic device from contact information of the second application, or obtained from contact information of the first communication application, or obtained from a contact application.

12. The method according to any one of claims 1 to 11, wherein the first electronic device further comprises a first modem, and the first modem is configured to connect to the first satellite; and sending, by the first communication application of the first electronic device in response to the second operation, the first message to the second electronic device via the first satellite specifically comprises:
in response to the second operation, sending, by the first communication application of the first electronic device, the first message to the first modem;
sending, by the first modem of the first electronic device, the first message to the first satellite; and
sending, by the first satellite, the first message to the second electronic device.

13. The method according to any one of claims 1 to 12, wherein the satellite communication system further comprises a first server and a second server, the first server is a server of the first communication application, and the second server is a server of the second application; and after receiving, by the first electronic device, the second operation of entering the first message on the satellite message editing page and sending the first message by the user, the method further comprises:
sending, by the first communication application of the first electronic device, a verification message of the second application and the first message to the first server via the first satellite, wherein the first communication application obtains the verification message of the second application via the second application;
sending, by the first server, the first message and the verification message of the second application to the second server; and
when confirming that the verification message of the second application meets a preset condition, pushing, by the second server, the first message to a public platform of the second application or the second application.

14. The method according to any one of claims 1 to 12, wherein the satellite communication system further comprises a first server, and the first server is a server of the first communication application; and receiving, by the second electronic device, the first message specifically comprises:
receiving, by the second electronic device, the first message sent by the first server, wherein the first server obtains the first message via the first satellite; and/or
the satellite communication system further comprises a second server, wherein the second server is a server of the second application; and receiving, by the second electronic device, the first message specifically comprises:
receiving, by the second application of the second electronic device, the first message via the second server.

15. The method according to claim 14, wherein the second electronic device receives the first message via the first communication application or an SMS application.

16. The method according to claim 15, wherein when the second electronic device is logged in to an account of the first communication application, the second electronic device receives the first message via the first communication application.

17. The method according to any one of claims 1 to 16, wherein the second application is a map application or an instant messaging application.

18. A satellite communication method, wherein the method is applied to a first electronic device, and the first electronic device comprises a first communication application and a second application; and the method comprises:
when the first electronic device displays a first user interface of the second application, receiving, by the first electronic device, a first operation of a user;
displaying, by the first electronic device, a satellite message editing page in response to the first operation;
receiving, by the first electronic device, a second operation of entering the first message on the satellite message editing page and sending the first message by the user; and
in response to the second operation, sending, by the first communication application of the first electronic device, the first message to a second electronic device via a first satellite.

19. The method according to claim 18, wherein displaying, by the first electronic device, the satellite message editing page in response to the first operation specifically comprises:
displaying, by the first electronic device, a second user interface in response to the first operation, wherein partial content of the first user interface is displayed in a first partial area of the second user interface, and the satellite message editing page is displayed in a second partial area of the second user interface.

20. The method according to claim 18 or 19, wherein the first user operation is an operation for a physical button on the first electronic device.

21. The method according to claim 18 or 19, wherein a first identifier is displayed in the first user interface, the first identifier indicates that the second application has permission to use a satellite communication capability of the first electronic device, and the first user operation is an operation for the first identifier.

22. The method according to any one of claims 18 to 21, wherein the second application is a third-party application or a system application.

23. The method according to any one of claims 18 to 22, wherein the satellite message editing page is a page of the second application, and the first communication application obtains the first message via the second application.

24. The method according to any one of claims 18 to 22, wherein the satellite message editing page is a page of the first communication application, and the first message is obtained by the first communication application.

25. The method according to any one of claims 18 to 24, wherein before sending, by the first electronic device, the first message to the first satellite via the first communication application, the method further comprises:
when the first electronic device does not establish a satellite communication connection to the first satellite, obtaining, by the first electronic device, satellite alignment data via the first communication application, and displaying a satellite alignment guidance page, wherein the satellite alignment page comprises operation prompt information, and the operation prompt information is used to prompt the user to change a posture of the first electronic device, for the first electronic device to establish the satellite communication connection to the first satellite.

26. The method according to any one of claims 18 to 25, wherein before sending, by the first electronic device, the first message to the first satellite via the first communication application, the method further comprises:
displaying, by the first electronic device, first prompt information, wherein the first prompt information is used to prompt the user whether to send the first message to the first satellite via the first communication application; and
sending, by the first electronic device, the first message to the first satellite via the first communication application specifically comprises:
receiving and responding to, by the first electronic device, a third operation of the user for the first prompt information, and sending, by the first electronic device, the first message to the first satellite via the first communication application.

27. The method according to any one of claims 18 to 26, wherein after receiving, by the first electronic device, the second operation of entering the first message on the satellite message editing page and sending the first message by the user, the method further comprises:
displaying, by the first electronic device in the first communication application, second prompt information indicating that the first message is already sent successfully.

28. The method according to any one of claims 18 to 27, wherein sending, by the first communication application of the first electronic device, the first message to the second electronic device via the first satellite specifically comprises:
sending, by the first communication application of the first electronic device, the first message to the second electronic device based on recipient information of the first message via the first satellite, wherein the recipient information of the first message is obtained by the first electronic device from contact information of the second application, or obtained from contact information of the first communication application, or obtained from a contact application.

29. The method according to any one of claims 18 to 28, wherein the first electronic device further comprises a first modem, and the first modem is configured to connect to the first satellite; and sending, by the first communication application of the first electronic device in response to the second operation, the first message to the second electronic device via the first satellite specifically comprises:
in response to the second operation, sending, by the first communication application of the first electronic device, the first message to the second electronic device via the first modem and the first satellite.

30. The method according to any one of claims 18 to 29, wherein the second application is a map application or an instant messaging application.

31. An electronic device, wherein the electronic device is a first electronic device, the first electronic device comprises one or more processors and one or more memories, the one or more memories are coupled to the one or more processors, the one or more memories are configured to store computer program code, the computer program code comprises computer instructions, and when the one or more processors execute the computer instructions, the first electronic device is enabled to perform the method according to any one of claims 1 to 30.

32. A computer-readable storage medium, comprising computer instructions, wherein when the computer instructions are run on a first electronic device, the first electronic device is enabled to perform the method according to any one of claims 1 to 30.
